(19)

**Europäisches Patentamt**
**European Patent Office**
**Office européen des brevets**

(11)   **EP 4 343 389 A1**

(12)   # EUROPEAN PATENT APPLICATION

(43) Date of publication:
**27.03.2024 Bulletin 2024/13**

(21) Application number: **23198249.7**

(22) Date of filing: **19.09.2023**

(51) International Patent Classification (IPC):
**G02B 3/00** *(2006.01)*   **G02B 27/09** *(2006.01)*

(52) Cooperative Patent Classification (CPC):
**G02B 27/0961; F21S 41/265; G02B 3/0043;**
**G02B 3/0062;** F21W 2102/13

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.09.2022 DE 102022210091**

(71) Applicants:
• **Fraunhofer-Gesellschaft zur Förderung**
**der angewandten Forschung e.V.**
**80686 München (DE)**

• **Friedrich-Schiller-Universität Jena**
**07743 Jena (DE)**

(72) Inventors:
• **Stefanidi, Dmitrii**
**07745 Jena (DE)**
• **Schreiber, Peter**
**07745 Jena (DE)**
• **Wilhelm, Leo Maximilian**
**07743 Jena (DE)**

(74) Representative: **König, Andreas Rudolf et al**
**Schoppe, Zimmermann, Stöckeler**
**Zinkler, Schenk & Partner mbB**
**Patentanwälte**
**Radlkoferstraße 2**
**81373 München (DE)**

(54)   **OPTICAL BEAM FORMER, HIGH BEAM HEADLIGHT AND METHOD FOR PROJECTING INCIDENT LIGHT**

(57)   An optical beam former for generating an emerging light beam from an incident light beam comprises a condenser lens array comprising a first plurality of condenser lenses, the first plurality of condenser lenses configured for receiving the incident light beam. The optical beam former comprises a projection lens array comprising a second plurality of projection lenses configured for receiving light from the condenser lens array and for radiating the emerging light beam. A number of the first plurality of condenser lenses is larger than a number of the second plurality of projection lenses and an edge of a projection lens is misaligned with regard to an opposing condenser lens.

Fig. 3

**Description**

The present invention relates to an optical beam former or beam shaper and to a method for producing the same. The present invention further relates to a high beam headlight for a vehicle and a vehicle comprising such a high beam headlight. The present invention particularly relates to an optical beam shaper for complex far-field distributions.
There is a couple of existing solutions for the beam shaping in the far field.

Diffusers

Diffusers are very efficient tools for the arbitrary far-field beam shaping; however they have a couple of disadvantages

- Sharp edges of the beam in the far-field are hard to generate or even impossible;
- A shaping of an intensity profile of the beam is typically limited and always corresponds to the scattering function of the diffusing surface;
- The centroid of the far-field built by a diffuser typically corresponds to the centroid of the incoming light bundle.

Arrayed Projector

Reference [1] proposes a way of homogeneous beam shaping in the far-field through the use of absorbing masks in each channel of a double-sided microlens array (MLA) in the setup of the Fly's Eye Condenser (FEC). Subsequently, an arbitrary continuous beam shaping can be achieved with channel-wise variation of the absorbing mask's size and shape. The disadvantage of such a system is that the use of absorbing elements leads to a significant loss of system transmission and optical efficiency.

Irregular Fly's Eye Condenser

Reference [2] proposes a solution for a maskless double-sided MLA, also known as irregular Fly's Eye Condenser (iFEC). Here, arbitrary continuous intensity profiles are achievable due to the channel-wise irregularities between microlenses. Main disadvantages are stray light caused by profile height jumps between neighboring microlenses and complicated MLA manufacturing, which can be avoided only to some extent using high sophisticated design algorithms [3].
There is, thus, a need for beam formers that are now for easy manufacturing and high quality far-field distributions.
An object of the present invention is to provide for an optical beam former, a method for providing an optical beam former, a projector, a high beam headlight for a vehicle, a vehicle having such a high beam headlight and for a method for projecting incident light that allows easy manufacturing of lens arrangements and for a far-field distribution with low amount of stray-light and unwanted artifacts.
This object is achieved by the subject matter as defined in the independent claims.
A finding of the present invention is that a use of a shared exit microlens (SEM) of a double-sided MLA along with providing a larger number of condenser lenses when compared to a number of projection lenses allows easy manufacturing of such arrays by avoiding complicated designs or additional structures and, at the same time, allow for a high quality of the far-field distribution as it allows to project sharp edges in the far field and/or for keeping the system efficiency (transmission) at the theoretical limit.
According to an embodiment, an optical beam former for generating an emerging light beam from an incident light beam comprises a condenser lens array comprising a first plurality of condenser lenses, the first plurality of condenser lenses configured for receiving the incident light beam. The optical beam former comprises a projection lens array comprising a second plurality of projecting lenses configured for receiving light from the condenser lens array and for radiating the emerging light beam. A number of the first plurality of condenser lenses is larger than a number of the second plurality of projection lenses. This leads to at least one projection lens that is shared by at least two condenser lenses which allows for additional degrees of freedom for designing the optical beam former in an easy way whilst maintaining a high quality in the far field distribution.
According to an embodiment a projector comprises such an optical beam former and a light source for providing the incident light beam.
According to an embodiment, a high beam headlight for a vehicle comprises an optical beam former as described herein and/or a projector as described herein. Embodiments also provide for a vehicle comprising such a high beam headlight.
According to an embodiment, a method for providing an optical beam former comprises providing a condenser lens array comprising a first plurality of condenser lenses, the first plurality of condenser lenses configured for receiving an incident light beam. The method comprises providing a projection lens array comprising a second plurality of projection lenses configured for receiving light from the condenser lens array and for radiating the emerging light beam. The method is executed such that a number of the first plurality of condenser lenses is larger than a number of the second plurality of projection lenses and such that the optical beam former is adapted for generating an emerging light beam from an incident light beam.

According to an embodiment, a method for projecting incident light comprises subjecting a condenser lens array having a plurality of condenser lenses with a beam of incident light to direct the incident light onto a projection lens array with a lower number of projection lenses when compared to a number of condenser lenses. The method comprises projecting light emitted by the projection lens array onto a projection surface.

Advantageous embodiments of the present invention are described herein whilst making reference to the accompanying drawings in which:

Fig. 1          shows a schematic side view of a projector according to an embodiment;

Fig. 2          shows a schematic perspective view of an implementation of the optical beam former according to an embodiment;

Fig. 3          shows a schematic side view of a part of an optical beam former according to an embodiment in which a number of three condenser lenses oppose a number of two projection lenses;

Fig. 4a-b       show schematic illustrations of a known FEC concept;

Fig. 5a-e       show schematic illustrations of a configuration of a projection lens covering two condenser lenses;

Fig. 6a         shows a schematic top view of an optical beam former in accordance with an embodiment where exit microlens overlaps with a number of three entrance microlenses;

Fig. 6b         shows a schematic representation of an output intensity profile of a first subbeam formed by the arrangement of Fig. 6a;

Fig. 6c         shows a schematic representation of an imaging path for a second entrance microlens in a top view

Fig. 6d         shows a schematic representation of an output intensity profile of the sub-beam formed in Fig. 6c.

Fig. 6e-f       show a top view of an imagining path for a second entrance microlens C2 and a corresponding output intensity profile;

Fig. 6g         shows a diagram representing a result of a superposition of sub-beams of Fig. 6a-f;

Fig. 7a-e       show schematic illustrations related to an optical beam former according to an embodiment that comprises an enlargement factor of 1.1 and an offset of lens vertices of 0.05;

Fig. 8a         shows a schematic front view of an elementary cell for an optical beam former according to an embodiment comprising a constant enlargement factor of projection lenses;

Fig. 8b-c       show schematic representations of possible intensity profiles obtained with the structure of Fig. 8a;

Fig. 9a         shows a schematic front view of an elementary cell for an optical beam former according to an embodiment comprising a variable enlargement factor of projection lenses;

Fig. 9b-c       show schematic representations of possible intensity profiles obtained with the structure of Fig. 9a;

Fig. 10a        shows a schematic diagram of a mirrored arrangement of the elementary cell of Fig. 9a according to an embodiment;

Fig. 10b-c      show schematic representations of possible intensity profiles obtained with the structure of Fig. 10a;

Fig. 11         shows a schematic flowchart of a method according to an embodiment that may be used, for example, to provide an optical beam former in accordance with an embodiment; and

Fig. 12     shows a schematic flowchart of a method according to an embodiment that may be used for projecting incident light.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

Embodiments described herein relate to multi lens arrays that comprises condenser lenses that are also synonymously referred to as entrance lenses. An MLA may also comprise exit lenses that are synonymously referred to as projection lenses.

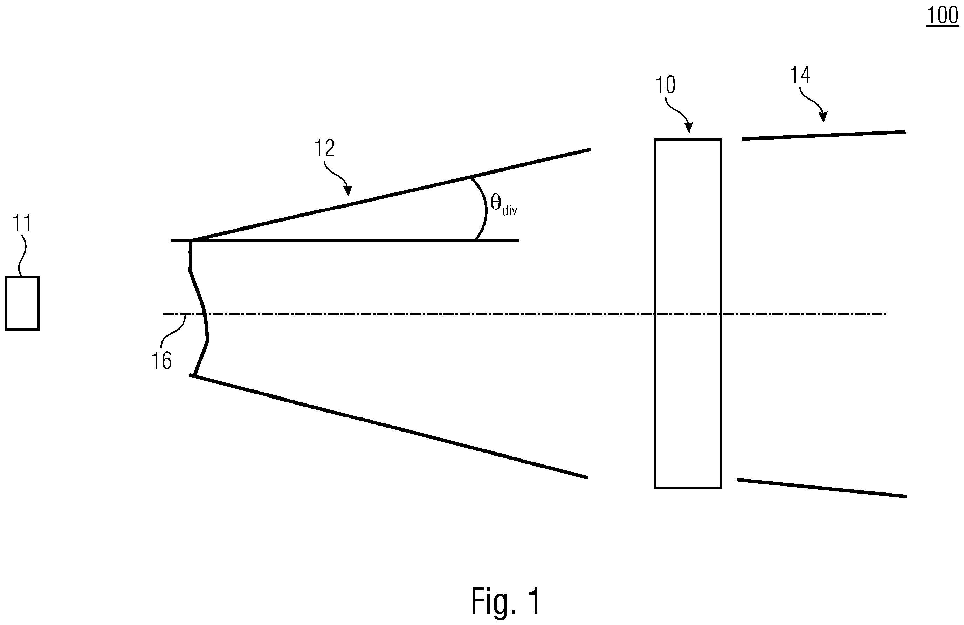

Fig. 1 shows a schematic side view of an optical system 100, e.g., a projector, according to an embodiment. The optical system comprises an optical beam former or beam shaper 10 forming an embodiment of the present invention. The beam former 10 may be formed as a micro-optical beam former, i.e., it may comprise so-called microlenses, wherein microlenses may relate to a size of some nanometers, micrometers or millimeters.

In the optical system 100, the beam former 10 may be illuminated by a light cone 12 that may have a certain divergence indicated as $\Theta_{div}$. Without limitation of the embodiments described herein, this divergence may be smaller than or equal to a numerical aperture (NA) of the entrance microlenses which may be described as:

$$\theta_{div} \leq \mathrm{asin}(NA_{ent})$$

$$(1)$$

wherein $NA_{ent}$ represents the numerical aperture of the entrance microlenses.

The optical beam former 10 may generate an emerging light beam 14 from the incident light beam 12 and may be directed along an optical axis 16.

One important aspect of the present embodiments is the use of a shared exit microlens (SEM) design in a double-sided MLA. This can be understood that at least two condenser lenses share a smaller number of projection lenses or, the other way round, that at least one projection lens of the projection lens array of an optical beam former described herein is a lens shared by at least 2, at least 3, at least 4 or even a higher number of 5, 6, 7, ..., condenser lenses. This may be understood that few entrance microlenses illuminate one exit microlens, i.e., they share one exit microlens. However, embodiments are not limited to integer multiples as will be described herein. The described principle may ensure a greater design freedom for the far field beam shaping without absorbing elements and may avoid a necessity of irregular structures of the entrance MLA to provide for a benefit over the iFEC.

The SEM approach may be implemented independently for achieving high-efficient and compact luminaries with arbitrary intensity far-field distribution, or in combination with existing beam-shaping solutions, e.g., in conjunction with FEC or iFEC. In both cases optional controlled cross-talk can be applied.

A projector in accordance with an embodiment may comprise an optical beam former according to an embodiment described herein. Further, a light source for providing the incident light beam 12 may be part of the projector. The light source 11 may be configured for providing the incident light 12 with a divergence that is at most a numerical aperture of the condenser lens array of the beam former 10.

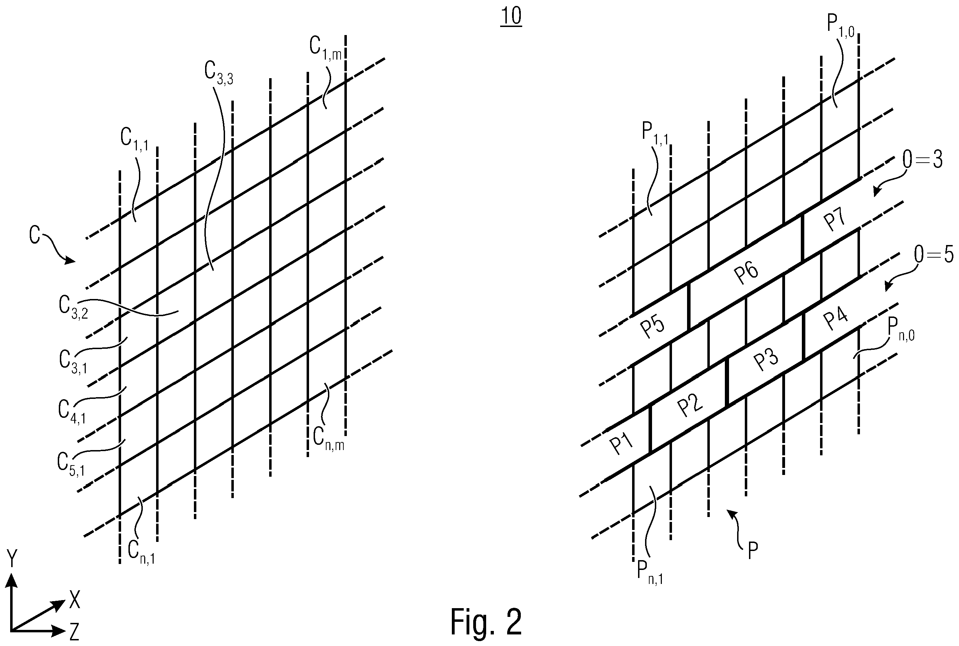

Fig. 2 shows a schematic perspective view of an implementation of the optical beam former 10 according to an embodiment. The optical beam former 10 comprises a condenser lens array C and a projection lens array P. The condenser lens array C may comprise condenser lenses $C_{n,m}$ that may be arranged in a matrix configuration, e.g., a regular matrix configuration with a number of m columns and m lines. However, such a regular arrangement is not necessary for implementing the present invention.

The projection lens array P may comprise a plurality of condenser lenses $P_{n,o}$ that may be arranged, at least partly, according to a matrix configuration having a number of n columns and o lines. According to an embodiment, the condenser lens array C and the projection lens array P are, in view of the overall arrays, congruent with respect to each other. This may be understood that the overall optical size of the arrays may be equal.

For example, a first base area of the plurality of condenser lenses of the condenser lens array C may be congruent with respect to one another, i.e., equally shaped along transversal directions. That is, the considered condenser lenses may be equally shaped in view of their aperture A second base area of the second plurality of projection lenses may be congruent with respect to one another, which is true for each of the lines of the projection lens array P in Fig. 2. That is, those considered projection lenses may be equally shaped in view of their aperture. A size of the second base area may be larger when compared to a size of the first base area which may be implemented, for example, as having a larger extension along at least one of the directions x and/or y of the projection lens when compared to the respective condenser lens. That is, at least parts of the projection lenses may have a larger aperture than the condenser lenses.

With regard to a 1:1 configuration to associate to each condenser lens $C_{n,m}$ exactly one projection lens $P_{n,o}$, the projection lens array P may comprise projection lenses P1, P2, P3, P4 arranged, for example, in line 5 and/or projection lenses P5, P6, P7 and possibly further projection lenses in line 0 = 3 that comprise a larger extent along the x-direction when compared to the 1:1 association. In the optical beam former 10, condenser lenses $C_{3,1}$ to $C_{3,m}$ may be configured so that neighboring condenser lenses share a projection lens of line 0=3 of the projection lens. Such a deviation from a regular approach may be different for different lines and/or columns as indicated by a larger size of projection lenses P5, P6 and P7 along the x-direction when compared to projection lenses P1, P2, P3 and P4. As indicated in Fig. 2, only a portion or partial area of the projection lens array P may deviate from an overall layout. Alternatively, the complete projection lens array P may deviate from regular 1:1 implementation. Although indicating the projection lenses P1 to P7 as deviating along a line-direction x from a regular implementation, such a deviation may, alternatively or in addition, be implemented along the column direction y.

Preferably, the exit lenses of the exit MLA P are located or placed at the focal plane of the entrance microlenses of the entrance MLA C and vice versa. Preferably, the plurality of condenser lenses comprises, within a tolerance range, a same first focal length to allow to precisely locate the second plurality of projection lenses at the focal length thereof. Alternatively or in addition, the second plurality of projection lenses comprises, within a tolerance range, a same focal length and the first plurality of condenser lenses is arranged at said focal length of the projection lenses. According to an embodiment, the microlenses of both the entrance and exit MLAs C and P may be implemented to comprise rectangular shapes and they may be positioned with respect to each other in such a way that both arrays have a fill factor of at least 90%, at least 92% or at least 95%, preferably as close to 100% as possible.

To implement a fill factor to be as close to 100% as possible allows to at least approximately form a 100% space-filling double-sided MLA. The SEM approach may comprise to deliberate increase of the size of the exit microlenses with regard to the size of the entrance microlenses.

In the example given in Fig. 2, four exit microlenses P1, P2, P3 and P4 have a double size with respect to the nominal size of the entrance microlenses and three exit microlenses P5, P6 and P7 have a tripled size with regard to the nominal size of the entrance microlenses. The entrance microlenses of the condenser lens array C may be implemented with a constant size over the whole entrance MLA C. Exit microlenses P1, P2, P3 and P4 cover more than one entrance microlenses each instead of only one as it would be in a completely regular FEC. Exit microlenses P5, P6 and P7 cover more than two entrance microlenses each. The entrance microlenses which are covered by one enlarged exit microlens are sharing one common exit microlens, instead of having an individual exit microlens for each. The light sub-bundle coming from each shared exit microlens from more than one entrance microlens is shaped differently comparing to a standard 1x1/1:1 channel.

The focal length of all enlarged exit microlenses may equal to the focal length of the entrance microlenses, which may be understood that a lateral enlargement of the exit microlens may result in a same enlargement of its numerical aperture NA with regard to the NA of the entrance microlenses. An enlargement of the exit microlens with regard to the entrance microlens may be described by the enlargement factor k that may be represented:

$$k = \frac{H_{(exit)}}{H_{(entrance)}} = \frac{NA_{(exit)}}{NA_{(entrance)}}$$

$$(2)$$

where $H_{(exit)}$ is a size of the enlarged exit microlens and $H_{(entrance)}$ is a size of the entrance microlens.

An enlargement of the exit microlens can be implemented only in one direction, e.g., horizontal or vertical or along both directions or planes, depending on the desired target-like distribution in the far field.

Local Description of the Entrance Microlens Alignment

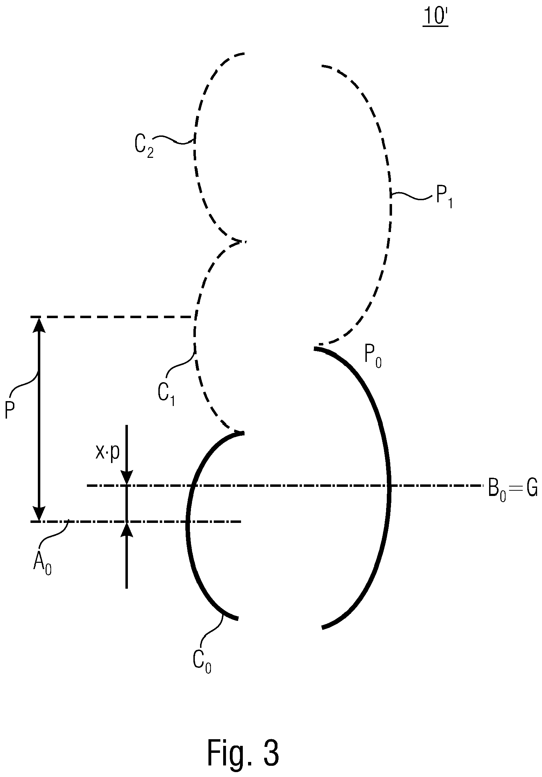

Besides the enlargement factor k, the lateral alignment of the entrance microlens with respect to the enlarged exit microlens may also play a role for the beam shaping. A local description of this alignment may be represented by equation 3 and Fig. 3. "Local" means in connection with the local description, that this description holds for the entrance microlens with minimum lateral vertex offset with respect to the address exit microlens at the optical axis of the MLA.

Fig. 3 shows a schematic side view of a part of an optical beam former 10 according to an embodiment in which a number of 3 condenser lenses $C_0$, $C_1$ and $C_2$ oppose a number of two projection lenses $P_0$ and $P_1$. With regard to Fig. 3, a local description of a first entrance microlens $C_0$ alignment with respect to the global optical axis G and a first microlens $P_0$ is described.

$$A_0 = G \pm xp = \pm xp$$

(3)

where:

| | |
|---|---|
| G = 0 | represents a global optical axis of the system, e.g., the optical axis 16 of Fig. 1; |
| p | represents a pitch of the entrance microlenses; |
| x = [0, ..., 1] | represents a normalized alignment factor; |
| $A_0$ | represents a vertex position of the entrance microlens, which is closest to the global axis G; |
| $B_0$ | represents a position of the center of the aperture of the exit microlens on the global axis. |

In the following, examples for different implementations of k and x or $\Delta x$ (representable as x multiplied with p) are given, and the corresponding output intensity profiles are provided. For a simpler representation, microlenses are shown as real lenses, e.g., with curvature, however, embodiments also address an implementation by use of paraxial, i.e., ideal, microlenses. A real profile of the microlenses is discussed later.

Before referring to embodiments of the present invention, some known solutions that do not form a part of the present invention are discussed. However, those known solutions are discussed in view of the introduced k factor and x factor, in particular in view of the known FEC and iFEC implementations. Factors k and x described herein relate to relative factors associated with a respective (condenser) lens. That is, an enlargement factor of k = 1.1 indicates an increase of a size of 10% of the projection lens when compared to the condenser microlens along the respective direction. An offset of x = 0.05 may indicate an offset of 5 % with respect to the microlens.

k = 1; x = 0 (FEC):

The FEC solution is discussed to highlight differences to the inventive SEM solution.

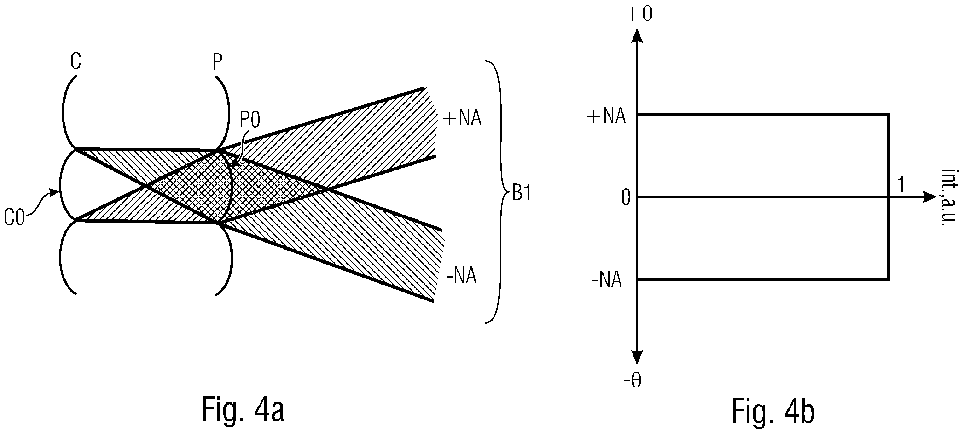

If a factor of only k = 1 is applied to the exit microlenses and no shift is applied from the initial position, i.e., x = 0, then one would obtain a micro-optical system which is equivalent to the FEC concept and described by [1]. Fig. 4a shows such a configuration and Fig. 4b shows a corresponding output intensity profile. The configuration of Fig. 4a is a 1x1 channel configuration in the top view. Without the inventive SEM approach there is implemented a completely regular microlens array on both sides, C and P, which provides a top-hat distribution in the far field shown in Fig. 4b and described in [1].

k = 2; x = 0.5 (iFEC):

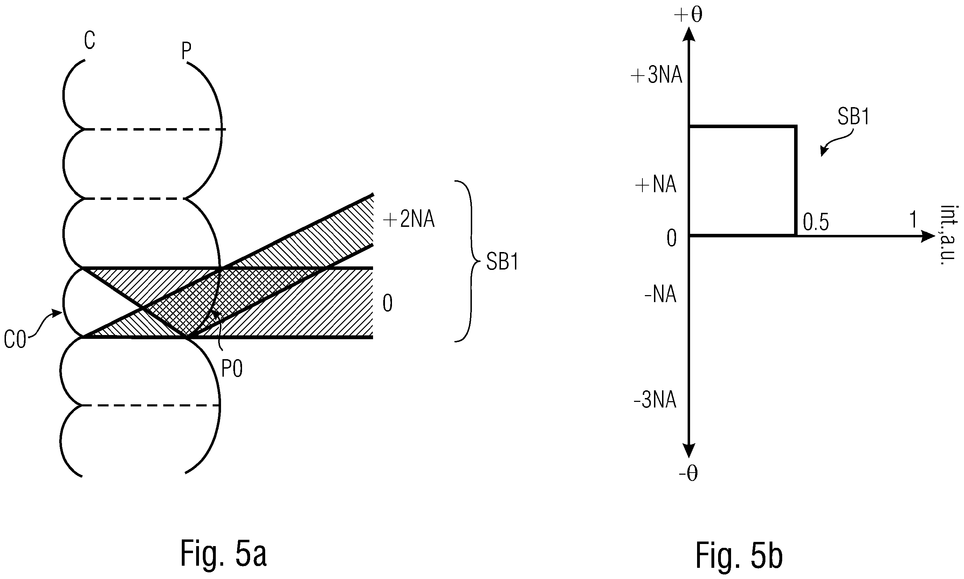

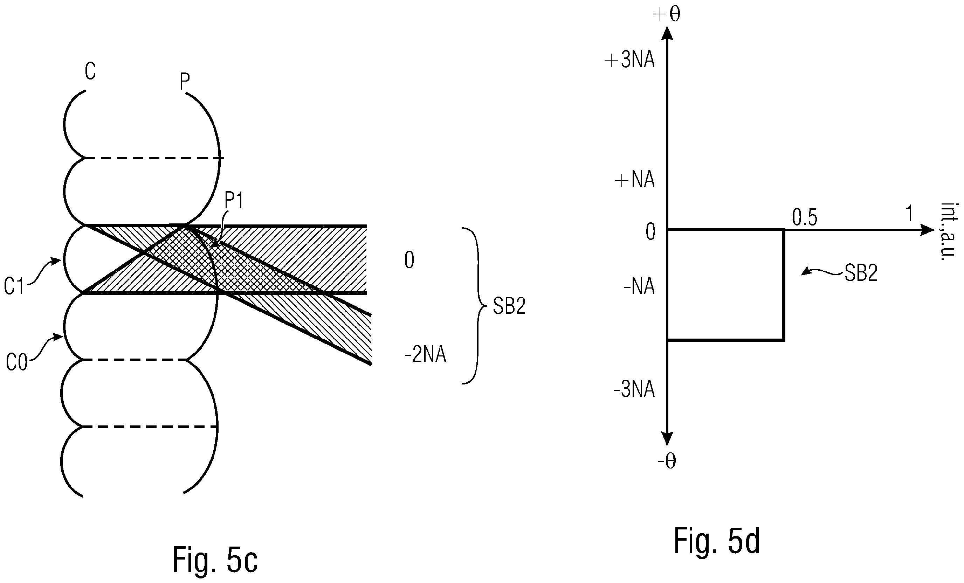

This section discusses the known iFEC solution to point towards differences with regard to the inventive SEM approach. To improve clarity, in Figs. 5a and 5c the inputs of the entrance microlenses C0 and C1 are shown separately.

Figs. 5a-e demonstrate the second case, which is an adaptation of [2]. Here, the entrance microlens C0 is imaged towards infinity with the exit microlens P0, which builds a sub-beam SB1 in the far-field shown in the output intensity profile of Fig. 5b relating to the imaging path for the entrance microlens C0 in the iFEC.

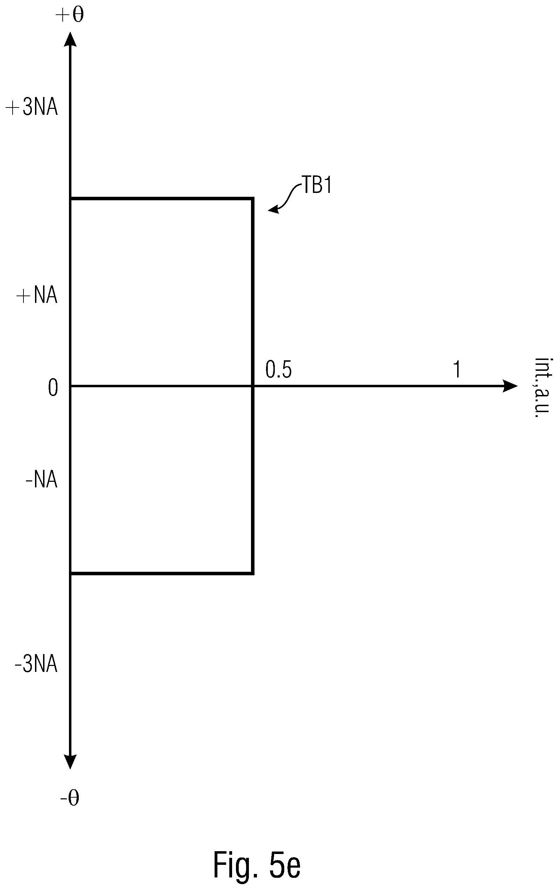

At the same time, the entrance microlens C1 is imaged by the exit microlens P1 as shown in Fig. 5c which forms a sub-beam SB2. Whilst Fig. 5c shows the imaging path for the entrance microlens C1 in the iFEC, Fig. 5d shows the corresponding output intensity profile. The vertices of exit microlenses P0 and P1 are shifted in such a way that the intensity profile and the resulting total beam TB1 looks as shown in Fig. 5e showing an intensity profile of the resulting total beam TB1, e.g., a superposition of the sub-beams SB1 and SB2.

A decomposition of the enlarged exit microlens into two identical microlenses is the equivalent to an iFEC where two exit microlenses have the opposite decentration of their vertices by half of the pitch of the microlenses. Such decomposition always can happen with a combination of even values of k and x = 0.5 or with a combination of odd values of k and x = 0, therefore these combinations do not form part of the embodiments described herein.

Embodiments of the present invention are also explained in the following. According to embodiments, a numerical aperture NA of at least one projection lens of the projection lens array P is larger than a numerical aperture of a condenser lens of the condenser lens array C. For example, the numerical aperture may comprise an integer multiple or a non-integer multiple.

k = 2; x = 0

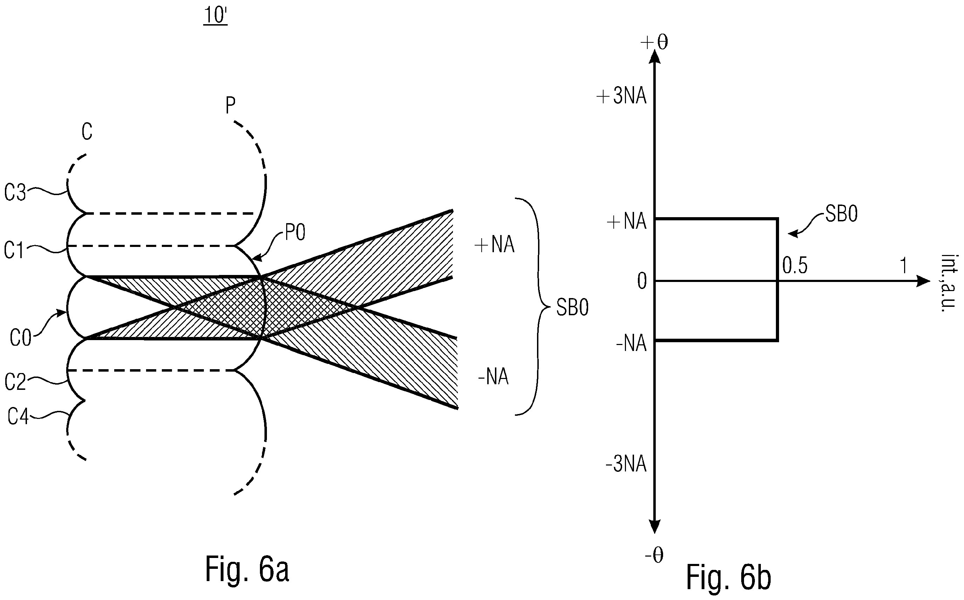

For clarity, in Figs. 6a-d, the inputs of the entrance microlenses C0, C1 and C2 are shown separately.
Unlike in FEC/iFEC, the idea of the SEM approach is to have more than one entrance microlens sharing one exit microlens, wherein at least one entrance microlens is "covered" completely by the opposing exit microlens and at least one neighboring entrance microlens is "covered" partially by the same exit microlens. To achieve a complex intensity profile of the beam in the far-field, embodiments may allow to avoid a use of absorbing elements or irregular entrance arrays. An example of SEM is given for a combination of k = 2 and x = 0 and may relate to a simple implementation of the present invention.
An incoming light bundle may comprise a divergence which is smaller than or equal to the numerical aperture of the entrance microlens as described in equation 1 and discussed in connection with Fig. 1. Such a combination forms an arrangement, where the enlarged exit microlens "covers" one entrance microlens fully and two entrance microlenses by half and the triplet of entrance microlenses is possibly positioned symmetrically with respect to the exit microlens.

**Single integer kfactor with constant value (simple embodiment):**

The use of only one kfactor over the whole MLA leads to the simple intensity profile of the beam in the far-field with one discrete step in the intensity.
To explain the structure of the MLA for this case, the local description of the entrance microlens alignment may be described as:
If:

$$A_0 = \pm xp$$

then:

$$A_i = \pm xp + ip = A_{i-1} + p \qquad (4)$$

in the same time:

$$B_0 = 0 => B_j = kpj \qquad (5)$$

where:

$i \in N\ [1, 2, 3, ..., n]$     *is a number of the certain entrance microlens;*

*n*     *is total number of the entrance microlenses in the array;*

*B*     *is a position of the center of aperture of the exit microlens;*

$j \in N\ [0, 1, 2, ..., m]$     *is a number of the certain exit microlens;*

m     *is a total number of the exit microlenses in the array.*

In this case the distance between the vertex of the entrance microlens and aperture center of the exit microlens stays constant:

$$B_j - A_i = const \qquad (6)$$

Fig. 6a shows an implementation of an optical beam former 10' in accordance with an embodiment where exit microlens P0 overlaps with a number of three entrance microlenses C0, C1, C2, at least in parts and receives light from those three entrance microlenses. Depending from the enlargement factor k, also a higher number of entrance microlenses may be shared.

Fig. 6b shows a schematic representation of an output intensity profile of sub-beam SB0 formed by the arrangement of Fig. 6a showing an imaging path for entrance microlens C0 in a top view.

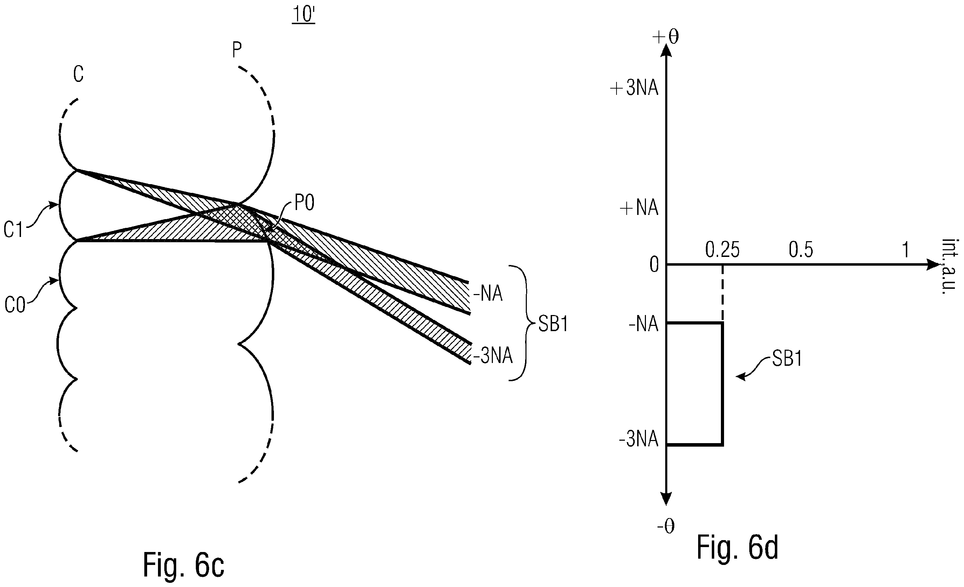

Fig. 6c shows the imaging path for entrance microlens C1 in a top view of the optical beam former 10'. Fig. 6d shows an output intensity profile of the sub-beam SB1 formed in Fig. 6c.

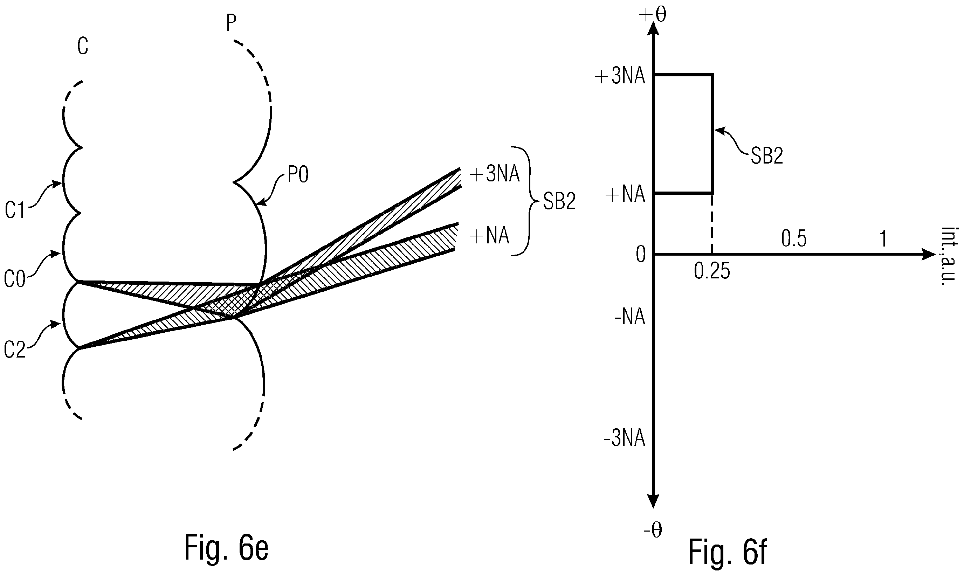

Correspondingly, Fig. 6e and 6f show a top view of an imaging path for entrance microlens C2 and a corresponding output intensity profile for the sub-beam SB2 formed in Fig. 6e. Whilst Figs. 6c and 6d represent the half of the entrance microlens C1 that is covered by the same enlarged exit microlens P0, which builds an optical sub-beam SB1 in the far field, Figs. 6e and 6f represent the half of another entrance microlens C2 that is covered by the same enlarged exit microlens P0, which builds an output sub-beam SB2 in the far field, the intensity profiles thereof being represented in Figs. 6d and 6f.

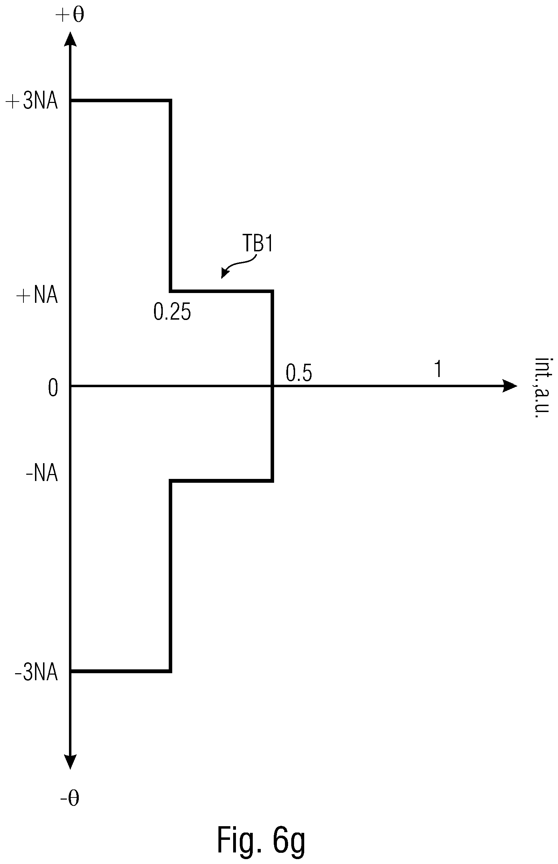

Fig. 6g shows a diagram representing a result of a superposition of sub-beams SB0, SB1 and SB2 of Figs. 6b, 6d and 6f to build a total beam TB1 in the far-field such that Fig. 6g represents an intensity profile of the resulting total beam TB1.

Whilst central microlens C1 of the considered part of the array is covered by a two times enlarged exit microlens P0, microlenses C1 and C2 are covered each half by the exit microlens P0.

As long as the incoming light bundle has a perpendicular incidence onto the MLA, the intensity profile remains in its shape for the divergence angles smaller or equal to the NA of the entrance microlenses, see equation 1. However, if the incidence of the incoming light bundle is not perpendicular, the energy in the sub-beams SB1 and SB2 may deviate from one another and the total beam TB1 may become asymmetrical, even if the divergence of the incoming light bundle remains inside of the entrance microlenses NA. Therefore, at least in some cases, a perpendicular incidence may be preferable, however, in some special cases, a far-field distribution which can be controlled by incidence of the incoming light bundle may also provide for advantages.

$k = 1.1; x = 0.05$

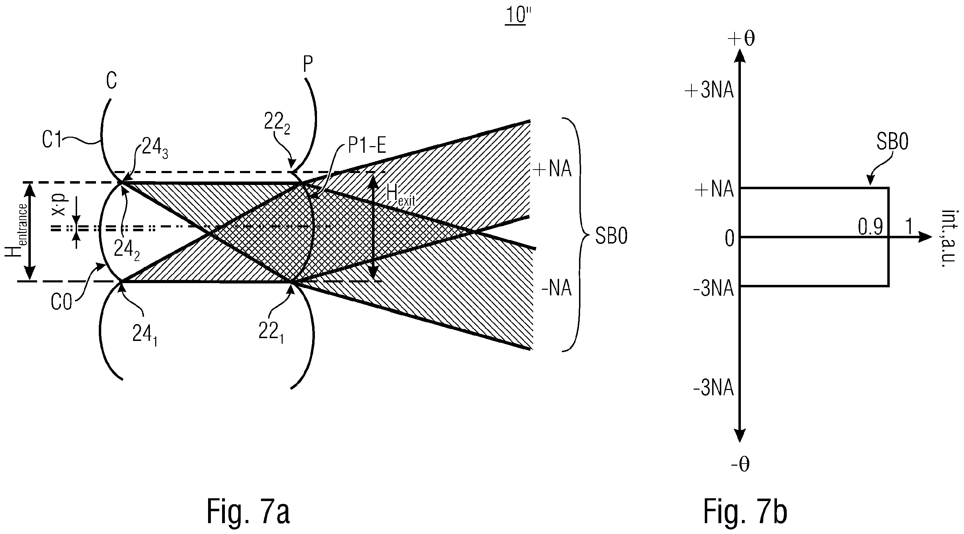

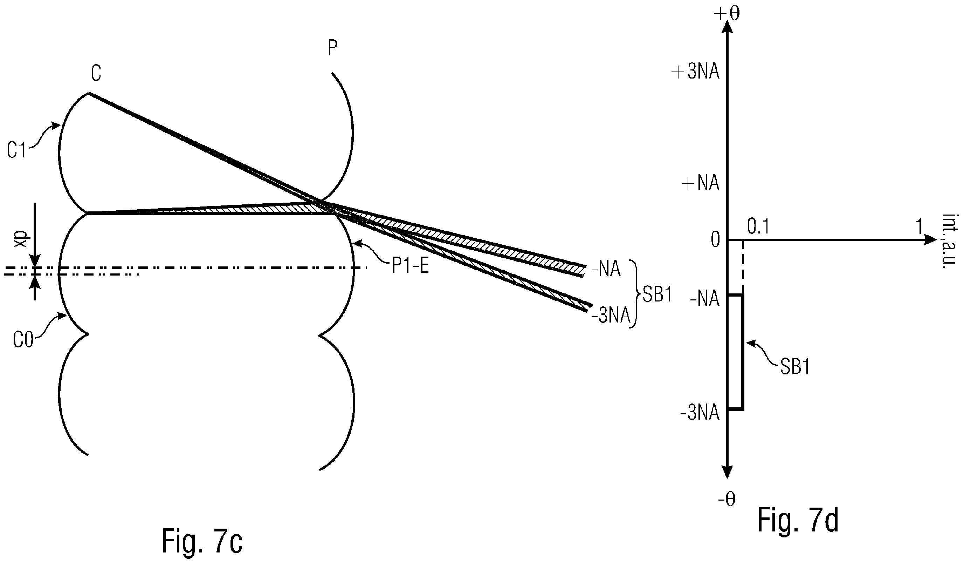

Whilst making reference to Fig. 7a-e and in particular Fig. 7a and Fig. 7c, when compared to the embodiment relating to k=2 that may be enlarged to other integer values of k, another example may be the use of non-integer numbers for the parameter k. The incoming light bundle may comprise a divergence, which is smaller than or equal to the numerical aperture of the entrance microlenses. This may form an arrangement, where the enlarged microlens P1-E covers one entrance microlens C0 fully, and another part of a neighboring second entrance microlens C1, e.g., a $1/10^{th}$ thereof based on the value of x, respectively of 0.05. The offset is indicated by x multiplied by p, x being a parameter describing the size of the lens, normalized by the pitch of the entrance microlens p. The result of xp may directly provide an absolute value for the offset. This may result in an asymmetrical beam in the far field. Whilst Fig. 7a shows the generation of a sub-beam SB0 using an optical beam former 10" in accordance with an embodiment and based on the imagining path for the entrance microlens C0, e.g., in a top-view, Fig. 7b shows a corresponding output intensity profile of the sub-beam SB0. Whilst an edge $22_1$ of projection lens P1-E in Fig. 7a may be aligned with a corresponding edge $24_1$ of microlens C0, although it might also be misaligned, an opposing edge $22_2$ e.g., in view of a left-right or top-bottom configuration, may be misaligned with respect to an edge $24_2$ opposing edge $24_1$ or an edge $24_3$ of microlens $C_1$ neighboring microlens C0. As a misalignment one may understand that edge $22_2$ opposes the optical active surface of a lens whilst not opposing an edge border of the lens. When referring, for example, to Fig. 5a, lens P0 comprises edges that are both aligned with an opposing edge of different condenser lenses C0, C1 respectively. What is described by this misalignment is a mismatch of the edges of the microlenses, which automatically appears when we enlarge the exit microlenses and keep 100% fill factor. A misalignment described by the factor x may describe a different or additional offset of the condenser lenslets with respect to the optical axis, which may help to construct the array or an elementary cell thereof.

Fig. 7c shows the imagining path for the entrance microlens C1 of the optical beam former 10", also in a top view.

Fig. 7d shows a schematic diagram representing an example output intensity profile of the sub-beam SB1 of Fig. 7c.

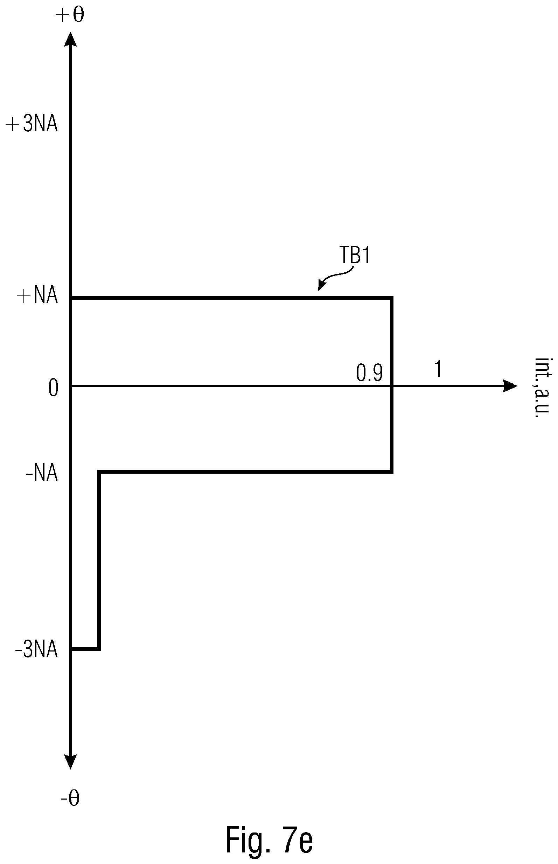

Fig. 7e shows a schematic representation of an intensity profile of the resulting total beam TB1 informed by super positioning of sub-beams SB0 and SB1 of Figs. 7b and 7d.

It is to be noted that Figs. 6a-7e show only two possible examples of the exit microlens enlargement and alignment factor x. However, a variety of combinations of K and X are possible and may be dependent on the target distribution. An angular size of the one or the other sub-beam, e.g., SB0 and/or SB1 in Figs. 7a-e, may depend on a lateral size of the entrance microlenses and the focal length of the exit microlenses. Hence, if the entrance MLA is regular, and the focal length of the enlarged microlenses remains same due to the enlargement, the angular size of the sub-beam may be kept fixed.

For example, the projection lens array P may comprise one or more cylinder lenses. Embodiments are, however, not limited to a cylinder lens configuration and may comprise other types of lenses. In some embodiments an anamorphic profile, e.g., aspherical cylinders or free-form may be preferred, however, this is not an obligatory implementation. Alternatively or in addition, opposing condenser lenses may also be formed as a cylinder lens, e.g., an enlargement of projection lenses when compared to the condenser lenses resulting in a different cylinder height over an equal cylinder diameter, although the diameter can also vary.

With regard to configurations of optical beam formers described herein, one possible configuration is to provide for an optical center of a projector lens of the plurality of projector lenses that is aligned with an optical center of a condenser lens and comprises, along at least one lateral direction of the projector lens and of the condenser lens a dimension that is greater than the dimension of the condenser lens. Such a configuration is shown, for example, in Fig. 6a. For example, the dimension of the projector lens may be, within a tolerance range, an integer multiple of the dimension of the condenser lens, e.g., twice, a triple or the like.

According to a different embodiment, the optical center of the projector lens of the plurality of projector lenses is offset along an offset direction. For example, when referring to Fig. 2, an offset may be implemented along direction X. The offset may be represented by parameter x as described above and illustrated, for example, in Fig. 7a. The projector lens may comprise, along at least one lateral direction of the projector lens, e.g., X and/or Y, a dimension that is greater than the dimension of the condenser lens. The offset is less than half an extension of the condenser lens along the offset direction, i.e., x < 0.5. For example, the projection lens of the projection lens array is a lens shared by at least two or at least three condenser lenses.

For both configurations, an aligned or an offset optical center of a projection lens with regard to the opposing condenser microlens, an enlargement factor k describing an at least local enlargement of a size of a projection lens along one or two directions x and/or y when compared to a condenser lens providing light for the projection lens and/or describing an enlargement of a numerical aperture of the projection lens when compared to the condenser lens is equal for different projection lens array sections and is an integer value or a non-integer value.

Embodiments provide for compact and highly efficient micro-optical beam shaping of complex arbitrary intensity far-field distributions without requiring and/or using absorbing or scattering elements using nearly regular microlens arrays. When considering an effect of the microlens enlargement for the complete MLA, embodiments are described with reference to a definition of an elementary cell (EC) is used for the explanation of the exit microlens enlargement for the complete array. The EC may form a certain set of the entrance and exit microlenses that meet the following criteria:

- It can be identically replicated;
- The replication of EC ensures a 100% fill-factor over the whole MLA;
- The EC provides a target or discretized target intensity profile of the beam in the far-field.

In case of regular MLA, the one EC may be a pair of entrance and exit microlens. In case of SEM approach, the EC has a different structure depending on the *k* factor.

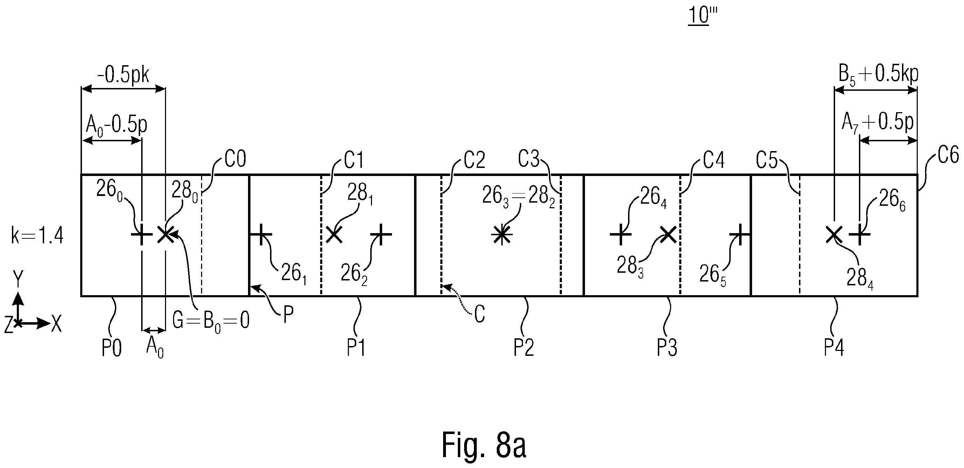

Fig. 8a shows a schematic front view of an elementary cell EC to form a part of an optical beam former 10‴ according to an embodiment in which same or different EC are arranged in high numbers of at least 2, 3, 5, or 10 or more. Fig. 8a is a drawing looking towards the projection lens array P whilst representing the condenser lens array C in dotted lines.

In the illustrated example, a number of 7 condenser lenses C0 to C6 shares a number of five projection lenses P0 to P4 whilst the condenser lens arrays C and P, the respective sections of an overall array respectively, are congruent with respect to one another. Having equally sized condenser lenses on the one hand and equally sized projection lenses on the other hand, the enlargement factor may result in 7/5 = 1.4 = k. In a center, e.g., projection lens P2 and condenser lens C3, the respective optical centers $26_3$ of condenser lens C3 and $28_2$ of projection lens P2 may overlap or be arranged at a same optical axis. From such a center, with an increase or decrease along the extension direction x, the optical center 26 may be offset from a respective optical center 28. The optical beam former 10‴ may form a part of the total optical beam former along with different parts. The enlargement factor k is, as shown in Fig. 8a, equal for different projection lens array sections P0 to P5. However, the factor K may also vary leading to the enlargement factor k being different for different projection lens array sections.

However, in Fig. 8a, it is shown that the position of the vertices 26 of the entrance microlenses with respect to the position of the centers of apertures 28 of the exit microlenses may vary or be non-constant, which may lead to a more complex structure of the elementary cell EC.

Fig. 8a shows a simple realization of the EC with k = 1.4 applied at the exit microlenses. Symbols "+" represent vertices 26 of entrance microlenses C, the symbols "x" represent vertices 28 of the enlarged exit microlenses. Fig. 8a thus shows a system with regular entrance MLA in dashed lines and exit MLA with enlarged microlenses in solid lines represented by C, P respectively and for an enlargement factor k = 1.4 in a front view.

The enlargement factor k = 1.4 is taken as an illustrative example only. It is to be noted that a different value K may be implemented without limitation. It is to be further noted that an overall optical beam former may comprise more than 1 elementary cell and more than one elementary cell may have each a constant enlargement factor that may be same or different over different elementary cells. Alternatively or in addition, elementary cells with varying enlargement factors may be combined with one another, the variation being same or different when compared for different elementary cells.

In this case, the position of the aperture centers of the enlarged exit microlenses can be described in the following way:

$$B_j = B_{j-1} + kp \tag{7}$$

where:
$j \in N\ (1, 2, 3, ..., m)$ *-a number of the certain exit microlens.*

Then the condition for the EC to be achieved is (conditions of both Equations (8) and (9) have to be met):

$$B_j + \frac{1}{2}kp = A_i + \frac{1}{2}p \tag{8}$$

and

$$-\frac{1}{2}kp = -A_0 - \frac{1}{2}p \tag{9}$$

That is, the full extent of the exit microlenses in the EC may be as precisely equal as possible to the full extent of the entrance microlenses in the EC. However, within a tolerance range of some percent, the embodiments are still operational.

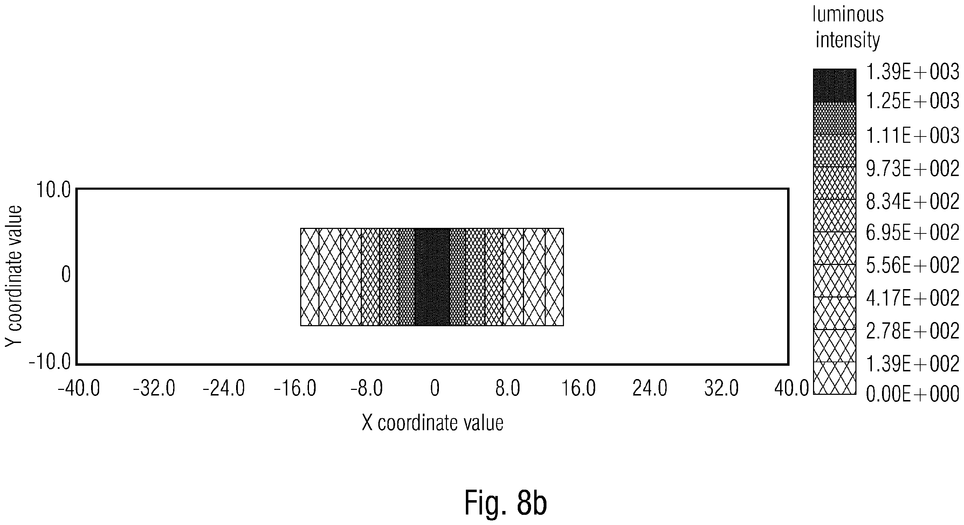

Fig. 8b-c show an example intensity distribution of the beam formed with the EC shown in Fig. 8a. The incoming light bundle has a divergence which is smaller or equal to the numerical aperture of the entrance microlenses.

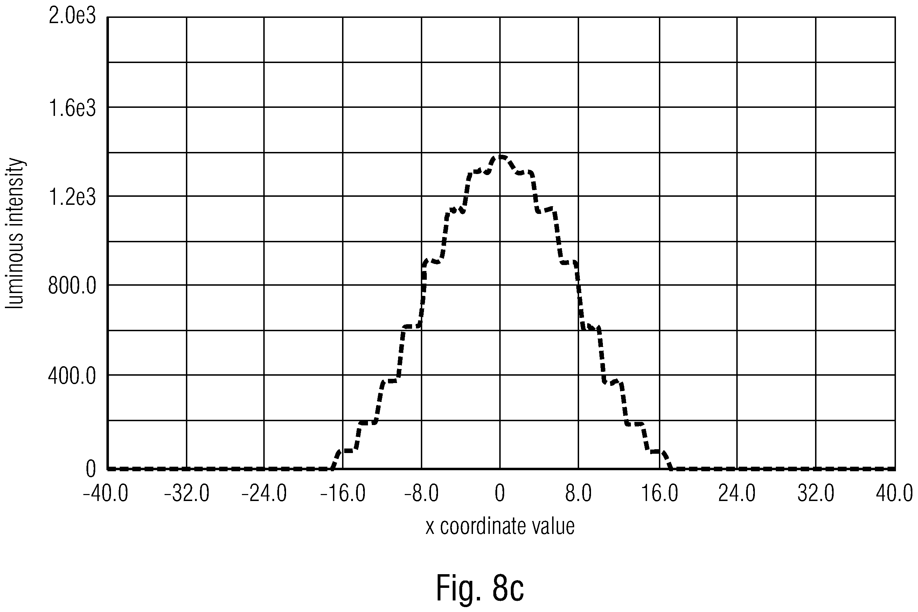

As may be seen from Figs. 8b and 8c, a smooth intensity distribution may be constructed with the elementary cell of Fig. 8a.

According to an embodiment, the projection lens array comprises a plurality of projection lens array sections, each projection lens array section having one or more projection lenses and opposing an associated condenser lens array section of the condenser lens array having one or more condenser lenses. An enlargement factor k describing an enlargement of a size of a projection lens when compared to a condenser lens providing light for the projection lens and/or describing an enlargement of a numerical aperture of the projection lens when compared to the condenser lens may vary between different projection lens array sections.

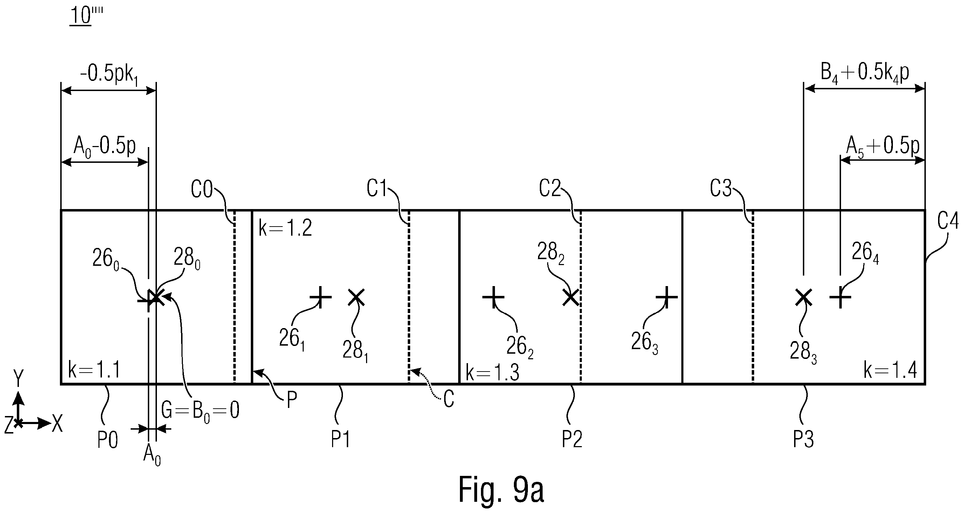

An example for such a variation is shown in Fig. 9a showing a schematic front view of an elementary cell for an optical beam former 10″″ according to an embodiment. Therein, a number of four projection lenses P0 to P3 opposes a number of five condenser lenses C0 to C4, wherein the number of projection lenses and/or the number of condenser lenses may differ from the illustrated example without deviating from the embodiments described herein. The enlargement factor k represents an enlargement of the respective projection lens along direction x in a similar way as in Fig. 8a, wherein the direction may, as an alternative or in addition, be a y direction. It is to be noted that enlargement along two different directions x and y may be implemented differently and independently from one another regardless of a constant or varying factor k.

Whilst condenser microlenses C0 to C4 may have a constant dimension along y on the one hand and along x on the other hand, projection lenses P0 to P3 may comprise a same or equal dimension along direction y when compared to each other and when compared to the condenser lenses. Furthermore, projection lenses P0 to P3 may have a deviating extension along direction X when compared to the condenser lenses C1 to C4 on the one hand and also when compared to other projection lenses in the optical beam former, the illustrated elementary cell respectively. For example, the enlargement factor k may vary, along a lateral direction, e.g., X, of the projection lens array P. This variation may be in accordance with a gradient function representing values of the enlargement factor. Possibly but not necessarily, the gradient may be a linear gradient. For example, the enlargement factor may vary, along the lateral direction of the projection lens array, according to a chirp function which is represented, for example, by enlargement factors k = 1.1, k = 1.2, k = 1.3 and k = 1.4 for different projection lenses P0 to P3 along direction x as shown in Fig. 9a.

In the optical beam former, the enlargement factor k may vary along one direction only or may vary along both directions, when implementing a variation of k. For example, the enlargement factor may vary along a first lateral direction of the projection lens array and may be constant within a tolerance range, along a second perpendicular direction of the projection lens array. Alternatively, the enlargement factor k may vary along the first lateral direction and along the second lateral direction of the projection lens array, e.g., x and y.

According to an embodiment, the enlargement factor may exclusively describe a non-integer value or a non-integer rational value. That is, regardless whether to use constant or varying values, e.g., implementing a chirp, non-integer values or non-integer rational values may be used, allowing for a low amount of artifacts in the projected light.

One preferred configuration is the use of more than one rational value of factor k over the whole MLA with a gradient linear increment of the non-integer value of k. In this case, a possibility of the EC can be guaranteed at least close to a 100% fill-factor, whilst deviations therefrom, e.g., at most 10%, at most 7% or at most 5% are still possible. Therefore, irrational values might be less-preferred for such embodiments. Once the EC which provides a desired intensity profile in the far-field is achieved, it can be identically replicated over the rest of the area of the MLA. A second option is a use of integer values for k. In this case, the alignment X is preferably equal to zero for even values of k and equal to 0.5 for odd values of k. For example, a k=0 may result in x=0.5 and k=2 may result in x=0 and the like. One possible limitation for the values of parameter k may be based or depend the numerical aperture of the entrance microlenses. For systems with numerical aperture of approximately 0.01, ..., 0.2, a preferable maximum value for k may be in a range of approximately at least 3 to at most 7. However, the depending on concrete application requirements, higher factors may also be possible, provided that additional efforts for aberration and chief-ray-angle correction are considered or the resulting effect are tolerated.

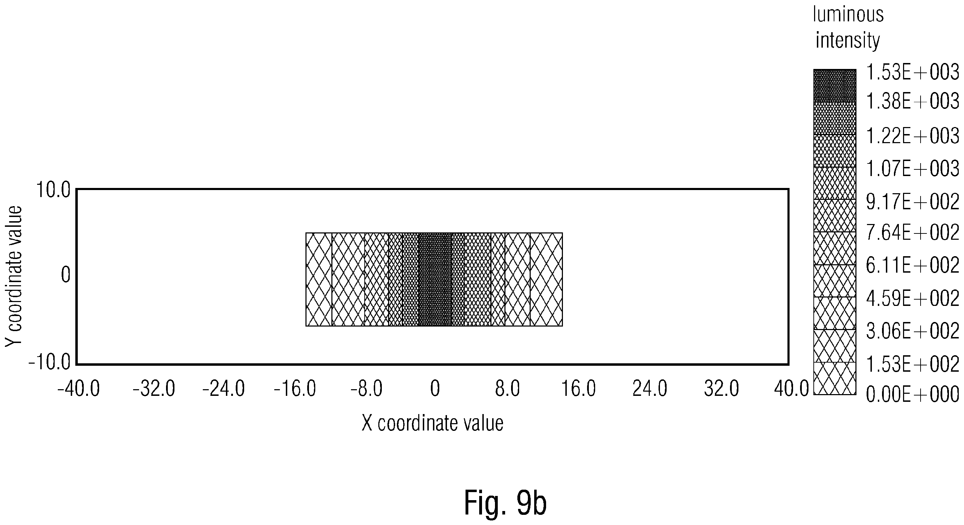

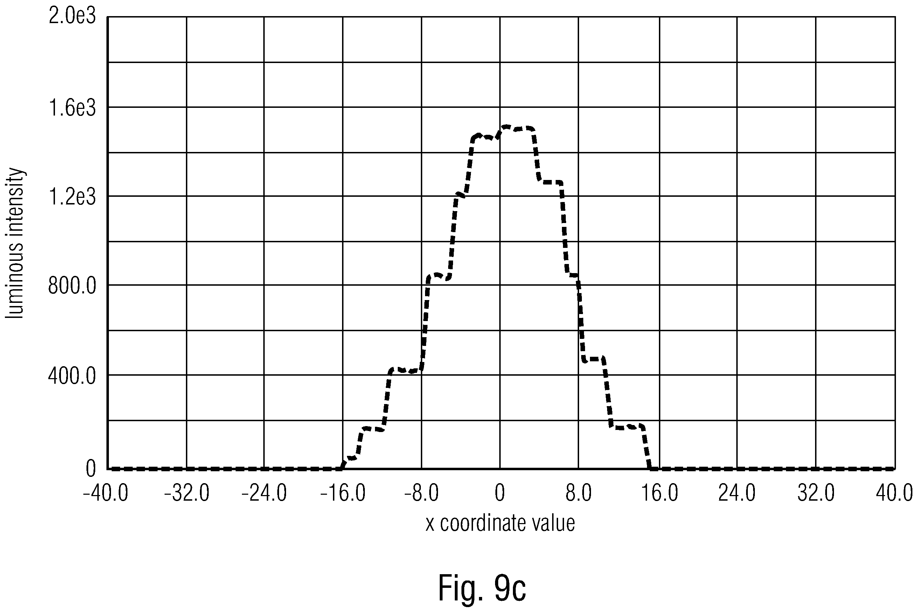

In other words, Fig. 9a represents a chirped rational non-integer k factor usage. More than only one single value for the k-factor can be used in one array. A high degree of design freedom may be achieved when implementing a set of non-integer k factors with a certain increment, e.g., 0.05, 0.1, 0.15, or any other non-integer increment. The smaller the increment of the k-factor over the total MLA, the smoother the resulting intensity profile being shown in Figs. 9b and 9c may be obtained. As in the case of only one single non-integer k, see, for example, Fig. 8a, the position of the vertices 26 of the entrance microlenses C0 to C4 with regard to the position of the centers 28 of apertures of the exit microlenses 28 cannot be constant when aiming for an almost 100% fill-factor.

Fig. 9a shows an example for an MLA with the range of K = [1.1, 1.2, ..., 1.4] where K = f(j) is a chirped array where f(j) describes the gradient function. Factor k can vary in the horizontal direction x as shown in Fig. 9a and/or in the vertical direction y.

The system with regular entrance MLA as shown by dashed lines and exit MLA with enlarged exit microlenses as shown in solid lines may relate to a position of the aperture centers 28 of the enlarged exit microlenses that may be described by:

$$B_j = B_{j-1} + \frac{1}{2}(k_j p + k_{j-1} p) \qquad (10)$$

where:
$j \in N\ (1,\ 2,\ 3,\ ...,\ m)$

Then the condition for the EC to be achieved:

$$B_j + \frac{1}{2}k_j p = A_i + \frac{1}{2}p \qquad (11)$$

and

$$-\frac{1}{2}k_0 p = -A_0 - \frac{1}{2}p \qquad (12)$$

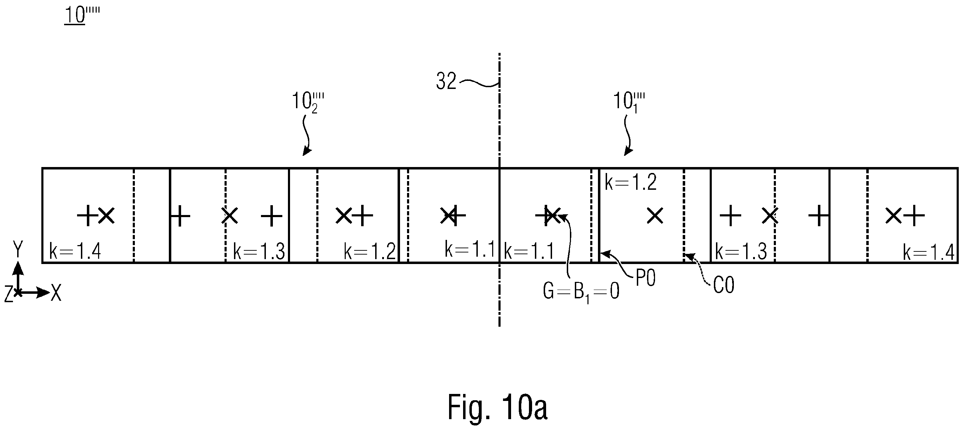

That is, the full extent of the exit microlenses in the EC may be precisely equal to the full extent of the entrance microlenses in the EC, i.e., they may be congruent to one another. As shown in Fig. 9a, due to the non-constant value of factor k, the elementary cell may comprise an asymmetrical structure which may provide for an asymmetrical intensity profile of the beam in the far-field shown in Fig. 9b and, more particular, in Fig. 9c where values for positive x-coordinates differ from values with negative x-coordinates. Figs. 9b and 9c show a resulting asymmetrical beam in the far-field and its intensity profile built by the elementary cell of Fig. 9a. To achieve a good or even perfectly symmetrical distribution, such an asymmetrical elementary cell of Fig. 9a may be combined with another elementary cell, e.g., to arrive at an arrangement of two mirrored asymmetrical elementary cells as shown in Fig. 10a.

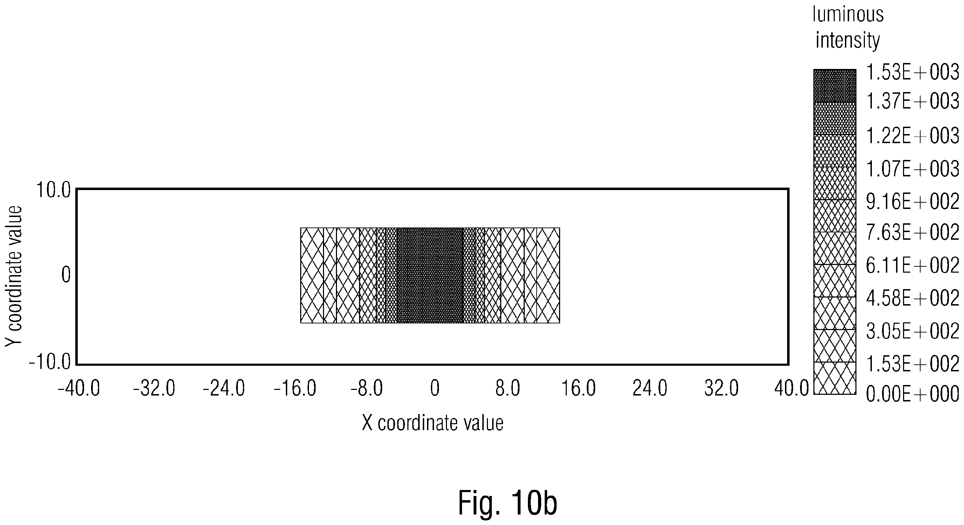

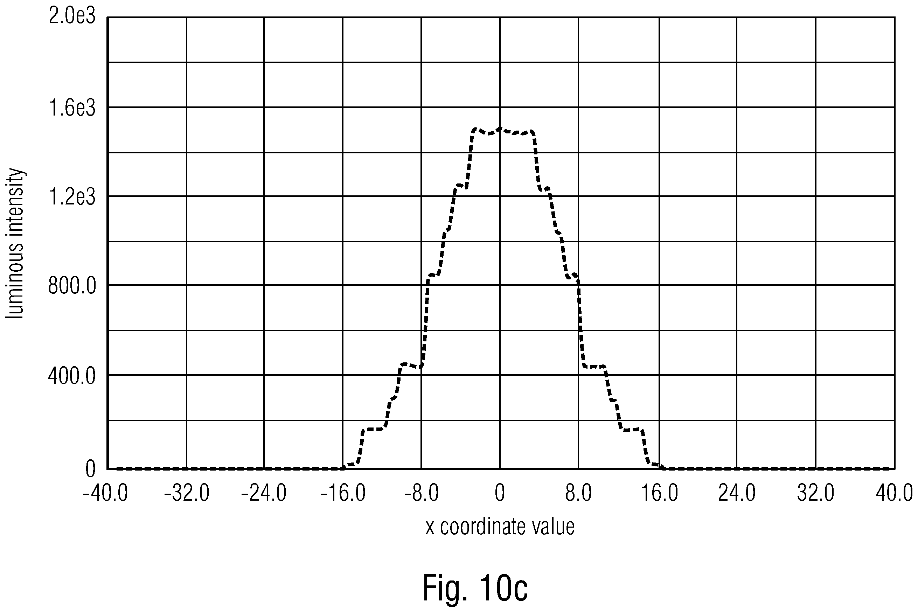

In Fig. 10a, with regard to a center axis 32, the elementary cell 10'''' of Fig. 9a is arranged as elementary cell $10_1''''$ and is combined with a mirrored version $10_2''''$. That is, the projection lens array may comprise a plurality of equally formed elementary cells, wherein each elementary cell may comprise a plurality of projection lenses P. The elementary cell may be formed asymmetrically along a first and/or a second lateral direction or may be formed asymmetrically along the first and second lateral direction. In Fig. 10a, a symmetrical EC with values k = [1.1, 1.2, ..., 1.4] is shown in an example front view. The intensity distribution built with such a symmetrical elementary cell may also be symmetrical as shown in Figs. 10b and 10c showing a symmetrical intensity profile of the beam built with the elementary cell shown in Fig. 10a. The more microlenses with different values for parameter K are used in the EC, the smoother and more complex intensity profiles may be obtained. In case of still distinguishable intensity jumps of the smooth profile, a slight defocusing of the exit microlenses, i.e., a small change of their focal length can be implemented to smoothen those jumps.

Embodiments of the present invention relate to an optical beam former and to a projector having such an optical beam former. Embodiments further relate to a high beam head light, e.g. for a vehicle comprising such an optical beam former and/or such a projector. Embodiments further relate to a vehicle having such a high beam headlight as the intensity profile may be suitable for defining the far-field of such a headlight.

At least some embodiments discussed rely on considerations for a paraxial approximation. In a real optical system, microlenses may have profile(s) with a finite radius (radii) of curvature, which may result in aberrations. The amount of aberrations and their criticality depend on the NA of the microlenses. A preferred profile of enlarged microlenses is spherical or aspherical. However, in some cases for additional correction of aberrations and channel-wise chief-ray-angle deviations they can have an anamorphic profile, e.g., aspherical cylinders or free-form. A focal length of enlarged microlenses may remain same for numerical aperture NA, preferably less than 5 millimeters. However, in certain cases some intentional defocusing of those microlenses may be possible, e.g., a slight focal length change.

Embodiments allow to provide for a smooth or staircase distribution of an intensity profile to be possible with less effort and by use of an easier structured MLA when compared to the iFEC approach as the condenser array may be completely regular which forms an advantage over the iFEC approach. Alternatively or in addition, full arbitrary symmetrical or asymmetrical intensity profiles may be possible which forms an advantage over simple diffusors. Alternatively or in addition, a completely maskless MLA may be provided by maintaining projection quality which forms an advantage over an arrayed projector AP. Embodiments still allow for combinations of "standard" exit MLA with SEM approach to give more design freedom, e.g., by implementing a semi-dynamic distribution.

Embodiments may be used for example, in an automotive front lightning, e.g., adaptive semi-dynamic or fully dynamic driving beam, a switchable or static spotlight, a dynamic or static complex urban illumination and/or in connection with a 2D dynamic illumination with adaptive function and large area or large field-of-view.

Some aspects of the present invention may be formulated as:

1. A double-sided micro-optical beam shaper for generating an output light beam of complex intensity profile in the far-field, which consists of:

- an entrance microlens array for acceptance of the incoming light bundle, consisting of several **identical** entrance microlenses and which have an additional lateral shift *x* w.r.t the global optical axis of the system and
- an exit microlens array consisting of several exit microlenses, which have an increased size by a certain set of factors *k*, compared to the size of the entrance microlenses and the values of the *k* factors are non-integer numbers, which differ for different exit microlenses.

2. The double-sided micro-optical beam shaper according to aspect 1, wherein *k* factor(s) are non-integer rational values.

- The double-sided micro-optical beam shaper according to aspects 1-2, wherein more than one non-integer rational *k* factors are applied at different exit microlenses, and corresponding *x* factor, which ensures 100% fill-factor, is applied at entrance microlenses.

- The double-sided micro-optical beam shaper according to aspects 1-2, wherein more than one non-integer rational *k* factors are applied at different exit microlenses, and corresponding *x* factor, which ensures 100% fill-factor, is applied at entrance microlenses, and the *k* factors have an increment only in horizontal direction, forming a one-dimensional horizontal elementary cell.

- The double-sided micro-optical beam shaper according to aspects 1-2, wherein more than one non-integer rational *k* factors are applied at different exit microlenses, and corresponding *x* factor, which ensures 100% fill-factor, is applied at entrance microlenses, and the *k* factors have an increment only in vertical direction, forming a one-dimensional vertical elementary cell.

- The double-sided micro-optical beam shaper according to aspects 1-2, wherein more than one non-integer rational *k* factors are applied at different exit microlenses, and corresponding *x* factor, which ensures 100% fill-factor, is applied at entrance microlenses, and the *k* factors have an increment in both directions, forming a two-dimensional elementary cell.

3. The double-sided micro-optical beam shaper according to aspects 1-2, wherein only one non-integer rational *k* is applied at all exit microlenses and corresponding *x* factor, which ensures 100% fill-factor, is applied at entrance microlenses.

4. The double-sided micro-optical beam shaper according to aspect 1, wherein *k* factor(s) are integer values.

- The double-sided micro-optical beam shaper according to aspects 1&4, wherein more than one integer *k* are applied at different exit microlenses and *x* = 0.5 is applied on those entrance microlenses which are covered by the enlarged exit microlenses with odd values of *k* and *x* = 0 is applied on those entrance microlenses which are covered by the enlarged exit microlenses with even values of *k*.

- The double-sided micro-optical beam shaper according to aspects 1&4, wherein more than one integer *k* are applied at different exit microlenses and *x* = 0.5 is applied on those entrance microlenses which are covered by the enlarged exit microlenses with odd values of *k* and *x* = 0 is applied on those entrance microlenses which are covered by the enlarged exit microlenses with even values of *k*, and *k* factors vary only in the horizontal direction, forming a horizontal one-dimensional elementary cell.

- The double-sided micro-optical beam shaper according to aspects 1&4, wherein more than one integer *k* are applied at different exit microlenses and *x* = 0.5 is applied on those entrance microlenses which are covered by the enlarged exit microlenses with odd values of *k* and *x* = 0 is applied on those entrance microlenses which are covered by the enlarged exit microlenses with even values of *k*, and *k* factors vary only in the vertical direction, forming a vertical one-dimensional elementary cell.

- The double-sided micro-optical beam shaper according to aspects 1&4, wherein more than one integer *k* are applied at different exit microlenses and *x* = 0.5 is applied on those entrance microlenses which are covered by the enlarged exit microlenses with odd values of *k* and *x* = 0 is applied on those entrance microlenses which are covered by the enlarged exit microlenses with even values of *k,* and *k* factors vary in both directions, forming a two-dimensional elementary cell.

5. The double-sided micro-optical beam shaper according to aspects, wherein only one odd integer *k* is applied at all exit microlenses and *x* = 0.5 is applied at all entrance microlenses.

6. The double-sided micro-optical beam shaper according to aspects, wherein only one even integer *k* is applied at all exit microlenses and *x* = 0 is applied at all entrance microlenses.

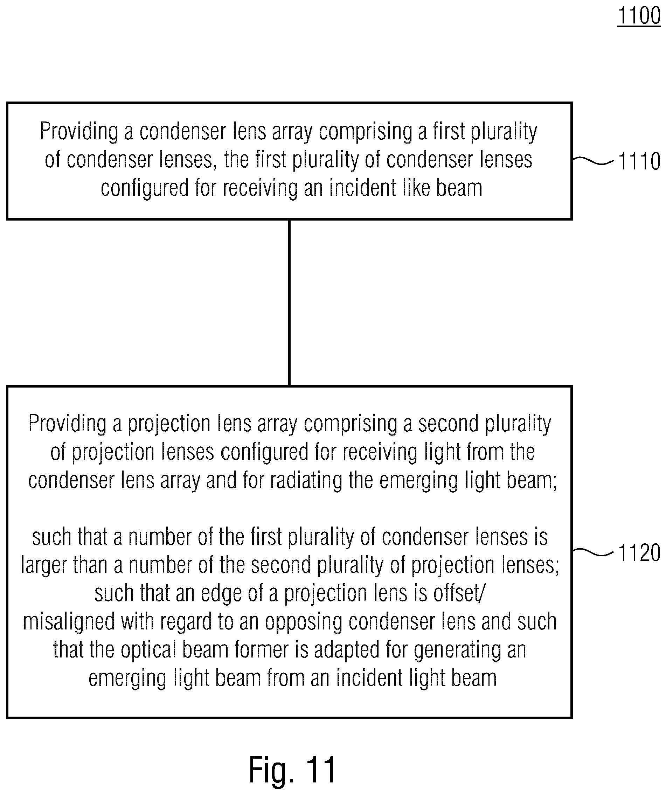

Fig. 11 shows a schematic flowchart of a method 1100 according to an embodiment that may be used, for example, to provide an optical beam former in accordance with an embodiment. A step 1110 comprises providing a condenser lens array comprising a first plurality of condenser lenses, the first plurality of condenser lenses configured for receiving an incident like beam.

A step 1120 comprises providing a projection lens array comprising a second plurality of projection lenses configured for receiving light from the condenser lens array and for radiating the emerging light beam. Method 1100 is executed such that a number of the first plurality of the condenser lenses is larger than a number of the second plurality of projection lenses, and such that an edge of a projection lens is offset or misaligned with regard to an opposing condenser lens and such that the optical beam former is adapted for generating an emerging light beam from an incident light beam.

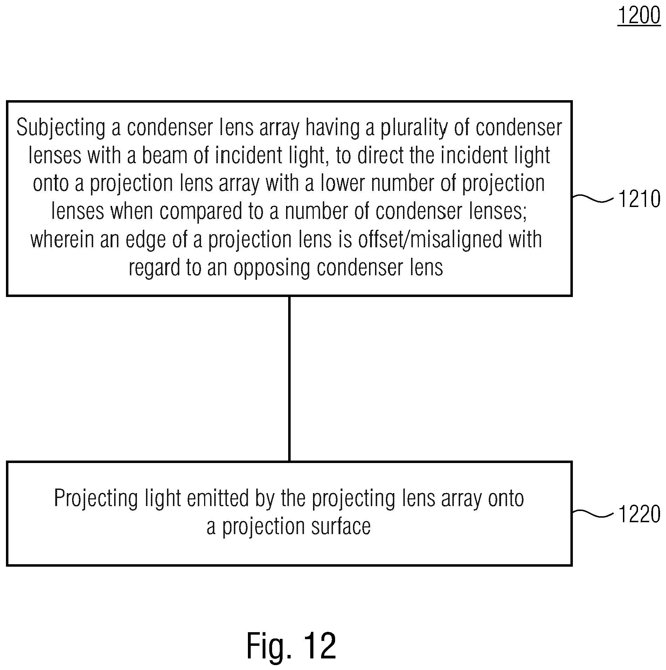

Fig. 12 shows a schematic flowchart of a method 1200 according to an embodiment that may be used for projecting incident light. A step 1210 comprises subjecting a condenser lens array having a plurality of condenser lenses with a beam of incident light, to direct the incident light onto a projection lens array with a lower number of projection lenses when compared to a number of condenser lenses, wherein an edge of a projection lens is offset or misaligned with regard to an opposing condenser lens. A step 1220 comprise projecting light emitted by the projecting lens array onto a projection surface.

Further aspects of the present invention are described below.

According to a first aspect an optical beam former for generating an emerging light beam (14) from an incident light beam (12) is proved, the optical beam former comprising:

a condenser lens array (C) comprising a first plurality of condenser lenses (C0-C6), the first plurality of condenser lenses (C0-C6) configured for receiving the incident light beam (12); and

a projection lens array (P) comprising a second plurality of projection lenses (P0-P7) configured for receiving light from the condenser lens array (C) and for radiating the emerging light beam (14),

wherein a number of the first plurality of condenser lenses (C0-C6) is larger than a number of the second plurality of projection lenses (P0-P7);

wherein an edge of a projection lens is offset or misaligned with respect to an opposing condenser lens.

According to a second aspect the optical beam former according to aspect is provided, wherein the condenser lens array (C) and the projection lens array (P) are congruent with each other.

According to a third aspect the optical beam former according to aspect 1 or 2 is provided, wherein at least one projection lens (P0) of the projection lens array (P) is a lens shared by at least two condenser lenses (C0, C1).

According to a fourth aspect the optical beam former according to one of previous aspects is provided, wherein a first fill factor of condenser lenses in the condenser lens array (C) is at least 90 %; and/or wherein a second fill factor of projection lenses in the projection lens array (P) is at least 90 %.

According to a fifth aspect the optical beam former according to one of previous aspects is provided, wherein a first base area of the first plurality of condenser lenses (C0-C6) is congruent with respect to one another; and wherein a second base area of the second plurality of projection lenses (P0-P7) is congruent with respect to one another; wherein a size of the second base area is larger when compared to a size of the first base area.

According to a sixth aspect the optical beam former according to one of previous aspects is provided, wherein the first plurality of condenser lenses (C0-C6) comprises, within a tolerance range, a same first focal length and wherein the second plurality of projection lenses (P0-P7) is arranged at the first focal length of the first plurality of condenser lenses (C0-C6); and/or wherein the second plurality of projection lenses (P0-P7) comprises, within a tolerance range, a same second focal length and wherein the first plurality of condenser lenses (C0-C6) is arranged at the second focal length of the second plurality of projection lenses (P0-P7).

According to a seventh aspect the optical beam former according to one of previous aspects is provided, wherein a second numerical aperture (NA) of at least one projection lens of the second plurality of projection lenses (P0-P7) is larger than a first numerical aperture (NA) of a condenser lens of the first plurality of condenser lenses (C0-C6).

According to an eighth aspect the optical beam former according to one of aspects 1 to 7 is provided, wherein an optical centre ($28_2$) of a projection lens (P2) of the plurality of projection lenses (P0-P7) is aligned with an optical centre ($26_3$) of a condenser lens (C3) and comprises, along at least one lateral direction (x) of the projection lens (P2) and of the condenser lens (C3) a dimension that is greater than the dimension of the condenser lens (C3).

According to a ninth aspect the optical beam former according to aspect 8 is provided, wherein the dimension of the projection lens (P2) is, within a tolerance range, an integer multiple of the dimension of the condenser lens (C3).

According to a tenth aspect the optical beam former according to one of aspects 1 to 7 is provided, wherein an optical centre ($B_0$; $28_0$) of a projection lens (P0) of the plurality of projection lenses (P0-P7) is offset along an offset direction (x) with respect to an optical centre (A0; $26_0$) of a condenser lens (C0) wherein the projection lens (P0) comprises, along at least one lateral direction (x) of the projection lens (P0) and of the condenser lens (C0) a dimension that is greater than the dimension of the condenser lens; wherein the offset ($\Delta x$) is less than half of an extension of the condenser lens (C0) along the offset direction (x).

According to an eleventh aspect the optical beam former according to aspect 10 is provided, wherein the projection lens (P0) of the projection lens array (P) is a lens shared by at least two condenser lenses (C0, C1).

According to a twelfth aspect the optical beam former according to one of previous aspects is provided, wherein an enlargement factor (k) describing an at least local enlargement of a size of a projection lens when compared to a condenser lens providing light for the projection lens and/or describing an enlargement of a numerical aperture (NA) of the projection lens when compared to the condenser is equal for different projection lens array sections and is an integer value or a non-integer value.

According to a thirteenth aspect the optical beam former according to one of previous aspects is provided, wherein the projection lens array (P) comprises a plurality of projection lens array sections, each projection lens array section opposing an associated condenser lens array (C) section of the condenser lens array (C); wherein an enlargement factor (k) describing an enlargement of a size of a projection lens when compared to a condenser lens providing light for the projection lens and/or describing an enlargement of a numerical aperture (NA) of the projection lens when compared to the condenser lens is equal for different projection lens array sections.

According to a fourteenth aspect the optical beam former according to one of previous aspects is provided, wherein the projection lens array (P) comprises a plurality of projection lens array sections, each projection lens array section opposing an associated condenser lens array (C) section of the condenser lens array (C); wherein an enlargement factor (k) describing an enlargement of a size of a projection lens when compared to a condenser lens providing light for the projection lens and/or describing an enlargement of a numerical aperture (NA) of the projection lens when compared to the condenser lens varies between different projection lens array sections.

According to a fifteenth aspect the optical beam former according to aspect is provided, wherein the enlargement factor (k) varies, along a lateral direction of the projection lens array (P), in accordance with a gradient function representing values of the enlargement factor.

According to a sixteenth aspect the optical beam former according to aspect 15 is provided, wherein the gradient is a linear gradient.

According to a seventeenth aspect the optical beam former according to one of aspects 14 to 16 is provided, wherein the enlargement factor (k) varies along a first lateral direction (x) of the projection lens array (P) and is constant, with a tolerance range, along a second perpendicular direction (y) of the projection lens array (P).

According to an eighteenth aspect the optical beam former according to one of aspects 14 to 16 is provided, wherein the enlargement factor (k) varies along a first lateral direction (x) and along a second perpendicular lateral direction of the projection lens array (P).

According to a nineteenth aspect the optical beam former according to one of aspects 14 to 18 is provided, wherein the enlargement factor varies, along a lateral direction of the projection lens array (P), according to a chirp function.

According to a twentieth aspect the optical beam former according to one of aspects 12 to 19 is provided, wherein the enlargement factor (k) exclusively describes a non-integer value or a non-integer rational value.

According to a twenty-first aspect the optical beam former according to one of previous aspects is provided, wherein the projection lens array (P) comprises a plurality of equally formed elementary cells, wherein each elementary cell comprises a plurality of projection lenses (P0-P7); and

wherein the elementary cell is formed symmetrically along a first and/or second lateral direction; or

wherein the elementary cell is formed asymmetrically along the first and second lateral direction.

According to a twenty-second aspect the optical beam former according to one of previous aspects is provided, wherein the projection lens array (P) comprises at least one cylinder lens and an opposing condenser lenses are each a cylinder lens.

According to a twenty-third aspect a projector (100) is provided, comprising:

an optical beam former according to one of previous claims; and

a light source (11) for providing the incident light beam (12).

According to a twenty-fourth aspect the projector of aspect 23 is provided, wherein the light source (11) is configured for providing the incident light (12) with a divergence that is at most a numerical aperture (NA) of the condenser lens array (C).

According to a twenty-fifth aspect a method (1100) for providing an optical beam former comprises:

providing (1110) a condenser lens array comprising a first plurality of condenser lenses, the first plurality of condenser lenses configured for receiving an incident light beam; and

providing (1120) a projection lens array comprising a second plurality of projection lenses configured for receiving light from the condenser lens array and for radiating the emerging light beam,

such that a number of the first plurality of condenser lenses is larger than a number of the second plurality of projection lenses; such that an edge of a projection lens is offset or misaligned with respect to an opposing condenser lens; and

such that the optical beam former is adapted for generating an emerging light beam from an incident light beam, the optical beam former comprising:

According to a twenty-sixth aspect a method (1200) for projecting incident light comprises:

subjecting (1210) a condenser lens array having a plurality of condenser lenses with a beam of incident light, to direct the incident light onto a projection lens array with a lower number of projection lenses when compared to a number of condenser lenses wherein an edge of a projection lens is offset or misaligned with respect to an opposing condenser lens; and

projecting (1220) light emitted by the projection lens array onto a projection surface.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

Abbreviations:

MLA - Microlens array;
SEM - Shared exit microlens;
FEC - Fly's Eye Condenser;
iFEC - Irregular Fly's Eye Condenser;
AP - Arrayed Projector;
EC - Elementary Cell

Literature:

[1] M. Sieler, P. Schreiber, P. Dannberg, A. Bräuer and A. Tünnermann, "Ultraslim fixed pattern projectors with inherent homogenization of illumination," Applied optics, vol. 51, pp. 64-74, 2012.
[2] Li et. al., "Optical beam former", US 11,327,325 B2.
[3] P. Schreiber, L. M. Wilhelm, "Light shaping with micro-optical irregular fly's eye condensers," Proc. SPIE 12078, International Optical Design Conference 2021.

**Claims**

1. An optical beam former for generating an emerging light beam (14) from an incident light beam (12), the optical beam former comprising:

   a condenser lens array (C) comprising a first plurality of condenser lenses (C0-C6), the first plurality of condenser lenses (C0-C6) configured for receiving the incident light beam (12); and
   a projection lens array (P) comprising a second plurality of projection lenses (P0-P7) configured for receiving light from the condenser lens array (C) and for radiating the emerging light beam (14),
   wherein a number of the first plurality of condenser lenses (C0-C6) is larger than a number of the second plurality of projection lenses (P0-P7);
   wherein an edge of a projection lens is offset or misaligned with respect to an opposing condenser lens.

2. The optical beam former according to claim 1, wherein the condenser lens array (C) and the projection lens array (P) are congruent with each other.

3. The optical beam former according to claim 1 or 2, wherein at least one projection lens (P0) of the projection lens array (P) is a lens shared by at least two condenser lenses (C0, C1).

4. The optical beam former according to one of previous claims, wherein a first base area of the first plurality of condenser lenses (C0-C6) is congruent with respect to one another; and wherein a second base area of the second plurality of projection lenses (P0-P7) is congruent with respect to one another; wherein a size of the second base area is larger when compared to a size of the first base area.

5.  The optical beam former according to one of previous claims, wherein the first plurality of condenser lenses (C0-C6) comprises, within a tolerance range, a same first focal length and wherein the second plurality of projection lenses (P0-P7) is arranged at the first focal length of the first plurality of condenser lenses (C0-C6); and/or wherein the second plurality of projection lenses (P0-P7) comprises, within a tolerance range, a same second focal length and wherein the first plurality of condenser lenses (C0-C6) is arranged at the second focal length of the second plurality of projection lenses (P0-P7).

6.  The optical beam former according to one of claims 1 to 5, wherein an optical centre ($28_2$) of a projection lens (P2) of the plurality of projection lenses (P0-P7) is aligned with an optical centre ($26_3$) of a condenser lens (C3) and comprises, along at least one lateral direction (x) of the projection lens (P2) and of the condenser lens (C3) a dimension that is greater than the dimension of the condenser lens (C3).

7.  The optical beam former according to claim 6, the dimension of the projection lens (P2) is, within a tolerance range, an integer multiple of the dimension of the condenser lens (C3).

8.  The optical beam former according to one of claims 1 to 5, wherein an optical centre ($B_0$; $28_0$) of a projection lens (P0) of the plurality of projection lenses (P0-P7) is offset along an offset direction (x) with respect to an optical centre (A0; $26_0$) of a condenser lens (C0) wherein the projection lens (P0) comprises, along at least one lateral direction (x) of the projection lens (P0) and of the condenser lens (C0) a dimension that is greater than the dimension of the condenser lens; wherein the offset ($\Delta x$) is less than half of an extension of the condenser lens (C0) along the offset direction (x).

9.  The optical beam former according to claim 8, wherein the projection lens (P0) of the projection lens array (P) is a lens shared by at least two condenser lenses (C0, C1).

10. The optical beam former according to one of previous claims, wherein the projection lens array (P) comprises a plurality of projection lens array sections, each projection lens array section opposing an associated condenser lens array (C) section of the condenser lens array (C); wherein an enlargement factor (k) describing an enlargement of a size of a projection lens when compared to a condenser lens providing light for the projection lens and/or describing an enlargement of a numerical aperture (NA) of the projection lens when compared to the condenser lens is equal for different projection lens array sections.

11. The optical beam former according to one of previous claims, wherein the projection lens array (P) comprises a plurality of projection lens array sections, each projection lens array section opposing an associated condenser lens array (C) section of the condenser lens array (C); wherein an enlargement factor (k) describing an enlargement of a size of a projection lens when compared to a condenser lens providing light for the projection lens and/or describing an enlargement of a numerical aperture (NA) of the projection lens when compared to the condenser lens varies between different projection lens array sections.

12. The optical beam former according to claim 11, wherein the enlargement factor (k) varies, along a lateral direction of the projection lens array (P), in accordance with a gradient function representing values of the enlargement factor.

13. The optical beam former according to one of claims 14 to 16, wherein the enlargement factor (k) varies along a first lateral direction (x) of the projection lens array (P) and is constant, with a tolerance range, along a second perpendicular direction (y) of the projection lens array (P); or
wherein the enlargement factor (k) varies along a first lateral direction (x) and along a second perpendicular lateral direction of the projection lens array (P).

14. The optical beam former according to one of claims 11 to 13, wherein the enlargement factor varies, along a lateral direction of the projection lens array (P), according to a chirp function.

15. The optical beam former according to one of claims 11 to 14, wherein the enlargement factor (k) exclusively describes a non-integer value or a non-integer rational value.

**16.** Projector (100) comprising:

an optical beam former according to one of previous claims; and
a light source (11) for providing the incident light beam (12);
wherein the light source (11) is configured for providing the incident light (12) with a divergence that is at most a numerical aperture (NA) of the condenser lens array (C).

**17.** Method (1200) for projecting incident light, the method comprising:

subjecting (1210) a condenser lens array having a plurality of condenser lenses with a beam of incident light, to direct the incident light onto a projection lens array with a lower number of projection lenses when compared to a number of condenser lenses wherein an edge of a projection lens is offset or misaligned with respect to an opposing condenser lens; and
projecting (1220) light emitted by the projection lens array onto a projection surface.

Fig. 1

Fig. 2

EP 4 343 389 A1

10'

$C_2$

$P_1$

$C_1$

$P_0$

P

x·p

$B_0 = G$

$A_0$

$C_0$

Fig. 3

Fig. 4a

Fig. 4b

EP 4 343 389 A1

Fig. 5a

Fig. 5b

EP 4 343 389 A1

int.,a.u.

1

0.5

SB2

+θ
+3NA
+NA
0
-NA
-3NA
-θ

Fig. 5d

SB2

0

-2NA

P

P1

C

C1

C0

Fig. 5c

Fig. 5e

int.,a.u.

SB0

Fig. 6b

SB0

Fig. 6a

Fig. 6c

Fig. 6d

EP 4 343 389 A1

Fig. 6e

Fig. 6f

EP 4 343 389 A1

Fig. 6g

Fig. 7a

Fig. 7b

EP 4 343 389 A1

Fig. 7c

Fig. 7d

EP 4 343 389 A1

Fig. 7e

Fig. 8a

EP 4 343 389 A1

Fig. 8b

Fig. 8c

Fig. 9a

EP 4 343 389 A1

luminous intensity

1.53E+003
1.38E+003
1.22E+003
1.07E+003
9.17E+002
7.64E+002
6.11E+002
4.59E+002
3.06E+002
1.53E+002
0.00E+000

Y coordinate value

10.0   0   -10.0

X coordinate value

-40.0   -32.0   -24.0   -16.0   -8.0   0   8.0   16.0   24.0   32.0   40.0

Fig. 9b

Fig. 9c

Fig. 10a

Fig. 10b

EP 4 343 389 A1

Fig. 10c

<u>1100</u>

Providing a condenser lens array comprising a first plurality of condenser lenses, the first plurality of condenser lenses configured for receiving an incident like beam ~1110

Providing a projection lens array comprising a second plurality of projection lenses configured for receiving light from the condenser lens array and for radiating the emerging light beam;

such that a number of the first plurality of condenser lenses is larger than a number of the second plurality of projection lenses; such that an edge of a projection lens is offset/ misaligned with regard to an opposing condenser lens and such that the optical beam former is adapted for generating an emerging light beam from an incident light beam ~1120

## Fig. 11

1200

Subjecting a condenser lens array having a plurality of condenser lenses with a beam of incident light, to direct the incident light onto a projection lens array with a lower number of projection lenses when compared to a number of condenser lenses; wherein an edge of a projection lens is offset/misaligned with regard to an opposing condenser lens

1210

Projecting light emitted by the projecting lens array onto a projection surface

1220

Fig. 12

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/278055 A1 (SPINGER BENNO [DE] ET AL) 9 September 2021 (2021-09-09) | 1-7,10, 16,17 | INV. G02B3/00 G02B27/09 |
| A | * paragraphs [0028], [0033], [0041] - [0044]; figures 1,2 * | 11-15 | |
| X | US 2013/201424 A1 (UCHIDA TATSUO [JP] ET AL) 8 August 2013 (2013-08-08) * paragraphs [0080] - [0082]; figures 1-3,10 * | 1-10 | |
| X | EP 1 046 932 A2 (NIPPON SHEET GLASS CO LTD [JP]) 25 October 2000 (2000-10-25) * paragraphs [0017], [0018]; figure 3 * | 1,8-10, 16,17 | |
| X | US 2021/215314 A1 (SCHREIBER PETER [DE] ET AL) 15 July 2021 (2021-07-15) | 1,11-13, 15-17 | |
| A | * figure 2 * | 14 | |
| X | US 10 078 227 B2 (DELTA ELECTRONICS INC [TW]) 18 September 2018 (2018-09-18) * column 9, lines 28-50; figure 7 * | 1,11-13, 15-17 | TECHNICAL FIELDS SEARCHED (IPC) G02B F21V |

The present search report has been drawn up for all claims

| Place of search | Date of completion of the search | Examiner |
|---|---|---|
| Munich | 6 February 2024 | Baur, Christoph |

EPO FORM 1503 03.82 (P04C01)

## ANNEX TO THE EUROPEAN SEARCH REPORT
## ON EUROPEAN PATENT APPLICATION NO.

EP 23 19 8249

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | | Publication date | Patent family member(s) | | | Publication date |
|---|---|---|---|---|---|---|---|
| US | 2021278055 | A1 | 09-09-2021 | CN | 113357608 | A | 07-09-2021 |
| | | | | EP | 3876021 | A1 | 08-09-2021 |
| | | | | US | 2021278055 | A1 | 09-09-2021 |
| US | 2013201424 | A1 | 08-08-2013 | CN | 102859425 | A | 02-01-2013 |
| | | | | EP | 2565704 | A1 | 06-03-2013 |
| | | | | JP | WO2011135755 | A1 | 18-07-2013 |
| | | | | US | 2013201424 | A1 | 08-08-2013 |
| | | | | WO | 2011135755 | A1 | 03-11-2011 |
| EP | 1046932 | A2 | 25-10-2000 | EP | 1046932 | A2 | 25-10-2000 |
| | | | | JP | 2000284217 | A | 13-10-2000 |
| | | | | US | 6295165 | B1 | 25-09-2001 |
| US | 2021215314 | A1 | 15-07-2021 | CN | 112955691 | A | 11-06-2021 |
| | | | | DE | 102018217213 | A1 | 09-04-2020 |
| | | | | EP | 3864342 | A1 | 18-08-2021 |
| | | | | JP | 7233528 | B2 | 06-03-2023 |
| | | | | JP | 2022512641 | A | 07-02-2022 |
| | | | | KR | 20210072074 | A | 16-06-2021 |
| | | | | RU | 2762067 | C1 | 15-12-2021 |
| | | | | US | 2021215314 | A1 | 15-07-2021 |
| | | | | WO | 2020074508 | A1 | 16-04-2020 |
| US | 10078227 | B2 | 18-09-2018 | TW | 201734565 | A | 01-10-2017 |
| | | | | US | 2017276953 | A1 | 28-09-2017 |

EPO FORM P0459

For more details about this annex : see Official Journal of the European Patent Office, No. 12/82

**REFERENCES CITED IN THE DESCRIPTION**

**Patent documents cited in the description**

- US 11327325 B2, Li

**Non-patent literature cited in the description**

- **M. SIELER ; P. SCHREIBER ; P. DANNBERG ; A. BRÄUER ; A. TÜNNERMANN.** Ultraslim fixed pattern projectors with inherent homogenization of illumination. *Applied optics,* 2012, vol. 51, 64-74

- **P. SCHREIBER ; L. M. WILHELM.** Light shaping with micro-optical irregular fly's eye condensers. *Proc. SPIE 12078, International Optical Design Conference,* 2021